# EUROPEAN PATENT APPLICATION

(11) **EP 4 164 142 A1**
(43) Date of publication of application: **12.04.2023**
(21) Application number: 21201337.9
(22) Date of filing: 07.10.2021
(51) Int. Cl.: H04B 7/185, H04B 7/06, H04B 7/08, G01S 3/32

(54) **COMMUNICATION SYSTEM APPARATUS AND METHODS**

(71) Applicant: Goettle, Peter, Haymarket, VA 20169 (US)
(72) Inventor: Goettle, Peter, Haymarket, VA 20169 (US)
(74) Representative: Riesen, Michael J.

(57) **Abstract**

The invention relates to the implementation of wireless communications for a moving platform, wherein the moving platform is provided connectivity to a network via terrestrial base stations and satellite. The network is designed such that the most cost-efficient delivery method is deployed, so in regions in which there is affordable access to power and communication networks, base stations may be deployed, and in regions in which power and communications network access is prohibitively expensive, satellite may be used. The network adapts to changes in moving platform location and provides smooth service transitions as moving platforms move from the service area of a first base station to the service area of a second base station and between a service of a base station and a service area of a satellite.

## Description

### BACKGROUND OF THE INVENTION

The usefulness and ease of accessing information, while on the move, has created tremendous growth in the wireless telecommunications industry. Users may access information for emergency situations, where health and safety are at risk, urgent matters, where quick decisions are required, and normal daily life, where relatively quick decisions are for sake of convenience. Service providers with their networks and hardware manufacturers with their devices have enabled end users to access information not only at their desks and in the comfort of their homes, but also while on foot, in automobiles, trucks, and trains, on boats and ships, and on airplanes, and the like. Still, there is unevenness to the quality and speed of mobile networks, with that unevenness often related to the available capacity of the network. Available capacity for a service area is often impacted by the service provider's cost of implementing the network, and the service provider's estimate of required demand and revenue associated with the network.

### SUMMARY OF THE INVENTION

Utilizing agile directional antennas in a base station and moving platform may provide a cost-effective means of providing a communication service to end-users on board the moving platform. Beam pointing agility may be obtained from an electronically scanned phased array antenna, a lens antenna, or a mechanically steerable antenna. The term steerable may refer to beam steering and may reference the steering of the beam (e.g., energy) radiating from an antenna. The choice of antenna implementation may be based on availability and maturity of the technology and associated cost. For a given amount of power in a transmitter or a given level of noise figurein a receiver, directional antennas may extend the range of a network, in comparison to an omni-directional antenna. An omni-directional antenna is able to transmit and pick up signalsin any direction and omni-directional antennas are inexpensive. A directional antenna, as its name implies, transmits and picks up signals from a preferred direction, and are used extensively in communications satellites and in the terminals that communicate with them. Directional antennas require proper alignment - a directional antenna in a transmitter must be aimed in the direction of a receiver, whose directional antenna must be aimed in the direction of the transmitter, for effective communications between the transmitter and receiver. When at least one of the endpoints of a wireless communication systems is mobile, the antennas must be able to track to ensure communication service continuity.

Knowledge of the location of the endpoints as a function of time may enableeach endpoint to steer its directional antenna and associated beam toward the other endpoint and permit communications between the endpoints. Endpoint location knowledge of fixed endpoints may be gained by mobile platforms by storing the locations (latitude, longitude, altitude, for instance) in a data store on board the mobile platform and updating, as necessary,for inclusion of location of new fixed endpoints and deletion of location of fixed endpoints, which are no longer in use. Endpoint location of a moving platform may be gained by fixed endpoints, when the moving platform broadcasts its location (longitude, latitude, altitude, for instance), and the broadcast may be over a system separate from the communication system. For instance, aircraft in the US and around the world are being outfitted with automatic dependent surveillance-broadcast **(ADS-B)** systems, in which an aircraft broadcasts its location to receivers on the ground and on-board other aircraft. A fixed endpoint, which possesses the ability to receive directly or indirectly location broadcasts of a moving platform, may be able to steer its directional antenna toward the moving platform and track the moving platform.

The invention described herein pertains to a wireless communication system, which provides a communication service for a moving platform. The communication servicemay enable end-users to use personal devices, such as a smartphone, tablet, laptop computer,or other device, on board the moving platform to access information from a remote network. The system may use directional antennas on-board the moving platform and at a base station. The antennas may be adapted to track - the moving platform relay antenna may track the base station, and the base station antenna may track the moving platform. The moving platform relay may be able to track a base station, because the moving platform relay may have knowledge of base station location; base station locations may have been uploaded to a data store on-board the moving platform. The base station may be able to track a moving platform, because it may have knowledge of the moving platform location; the base station may gain moving platform location from the moving platform broadcasting its location. The base station may also gain moving platform location from an external system, which tracks moving platforms.

The base station may be communicatively coupled to a network, such as the Internet, and end-user devices, such as smartphones, tablets, and laptop computers, on-board the moving platform may be communicatively coupled to the moving platform relay. The invention provides a means for end-users on board a moving platform to gain access to the Internet, so that they can web-surf, access e-mail, stream video, upload files, and perform other tasks that are popular with end-users. With the moving platform control system communicatively coupled to the moving platform relay, the wireless communication system, described herein, may also improve safety for cases in which the moving platform is piloted or driven autonomously.

### BRIEF DESCRIPTION OF THE DRAWINGS

FIG 1 provides an overview of a wireless communication system for end- users aboard a moving platform. Such a moving platform may be an airplane, an aircraft, an automobile, a bus, a truck, a train, a balloon, a drone, a boat, a ship, or any other form of conveyance. The figure shows a base station communicatively coupled to the Internet, end- user devices communicatively coupled to a relay on-board the moving platform, and wireless connectivity between the relay and base station.
FIG 2 depicts an architecture for a moving platform relay, which may comprise a directional antenna and radio, antenna and radio management device, and a wireless router. While FIG 2 shows the wireless router as part of the relay, in some embodiments, the wireless router may be external to the relay. FIG 2 shows inputs, whichmay be used to steer an antenna beam on the moving platform relay.
FIG 3 depicts an architecture for a base station, which may comprise a directional antenna and radio, antenna and radio management device, and a gateway. FIG 3 shows inputs, which may be used to steer a base station antenna beam.
FIGS 4A, 4B, and 4C depict beam steering for a base station and moving platform at three instances in time. The steering is based on the location of the moving platform.
FIG 5 depicts a mechanically steerable reflector antenna with capability to adjust beam pointing in azimuth and elevation.
FIG 6 depicts a wireless communication system for a moving platform, in which the moving platform broadcasts its location, which is received on the ground at a by a moving platform position receiver, whose outputs are communicatively coupled to a base station, to enable the base station to steer an antenna beam in the direction of the moving platform.
FIG 7A depicts an antenna system for a moving platform. The system contains an antenna section, approximately parallel to the moving platform body and may be suited for communications with a base station over a range of angles off of normal (nadir) and which may be a phased array. The system also contains antenna sections, which protrudefrom the moving platform body at an angle and may be suited for cases in which the nadir angle between the platform and base station is too high.
FIG 7B depicts a scenario in which a moving platform nadir angle toward a base station is small, resulting in large effective area of the moving platform antenna toward the base station.
FIG 7C depicts a scenario in which a moving platform nadir angle toward a base station is large, resulting in small effective area of the moving platform antenna toward the base station.
FIG 8 depicts the high-level architecture of a management system that manages a particular base station.
FIG 9 depicts the high-level architecture of a management system that manages a moving platform relay.
FIG 10 depicts the high-level architecture of a management system that manages a group of base stations.
FIG 11 depicts an example communication service initiation for a moving platform, which is an airplane, among 4 base stations with associated base station service areas. Service initiation is aided by an ADS-B receiver and processing of ADS-B messages, originating on the aircraft. Master base station management system takes the aircraft location input and determines the base station that the airplane uses. While the depiction shows an airplane, the concept is applicable to any moving platform with a directional antenna.
FIG 12 outlines a method for communication service initiation for a moving platform, wherein the base station management system determines the base station that the moving platform uses.
FIG 13 outlines a method for communication service initiation for a moving platform, wherein the moving platform relay management system determines the base station that the moving platform uses.
FIG 14 depicts an overview of a base station transition for a moving platform, which in the figure is an airplane but could be any moving platform, from a first base station to a second base station to maintain communication service continuity for a moving platform as it travels from the service area for the first base station to the service area for the second base station. FIG 14 depicts a "make before break" transition, since there is nosegment of time in which airplane-base station connectivity is broken.
FIG 15 depicts an overview of a base station transition for a moving platform, which in the figure is an airplane but could be any moving platform, from a first base station to a second base station to maintain communication service continuity for a moving platform as it travels from the service area for the first base station to the service area for the second base station. FIG 15 depicts a "break before make" transition, since there maybe a segment of time in which airplane-base station connectivity is broken.
FIG 16 outlines a make before break method for a moving platform to transition from a first base station to a second base station to maintain communication servicecontinuity as the moving platform moves. The method includes determination of the second base station.
FIG 17 outlines a break before make method for a moving platform to transition from a first base station to a second base station to maintain communication servicecontinuity as the moving platform moves. The method includes determination of the second base station.
FIG 18 provides a sample plot of gain vs. off-boresite angle for a directional antenna and includes an estimate of antenna beam width.
FIG 19 outlines a method to update pointing of a directional antenna, which may be used in a base station or moving platform relay. The method may take advantage of natural pauses in communications between the moving platform and base station; such pausesmay arise in a TDD system.
FIG 20 outlines a method to update pointing of a directional antenna, which may be used in a base station or moving platform relay. The communications between the base station and moving platform may employ an FDD approach, and implementation of a pointing update may require introduction of pauses in communication between base station and moving platform.
FIG 21 illustrates a system for which there is partial base station coverage. Such a system may be supplemented by a communication satellite, such that a region which does not have base station coverage may use a be covered by a communication satellite.

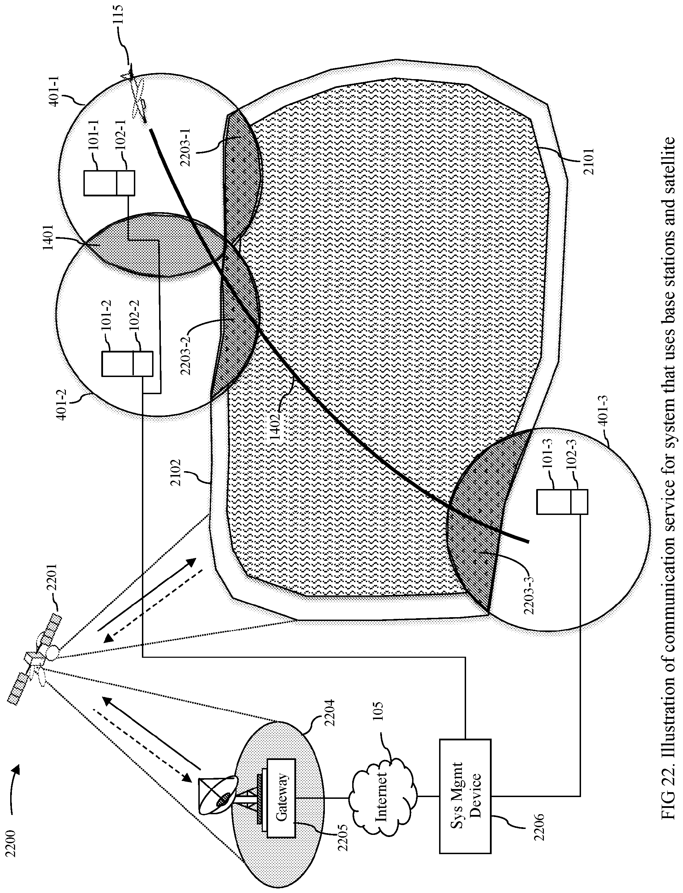

FIG 22 depicts a communication system for a moving platform, which employs base stations and a communication satellite. Selection of the vehicle - satellite or base station - that provides connectivity for the moving platform may be determined from moving platform location. The satellite serves as a relay between a satellite gateway, whichmay be connected to the Internet, but could also be connected to any network, including a private network, and the moving platform. A moving platform may utilize satellite in areas,in which base station coverage is lacking. A moving platform may transition between base station and satellite and vice versa to maintain continuity of communication service as the moving platform moves between base station and satellite coverage regions.
FIG 23 outlines a method for a moving platform to transition from a base station to communication satellite to maintain communication service continuity.
FIG 24 outlines a method for a moving platform to transition from a communication satellite to base station to maintain communication service continuity.
FIG 25 depicts the high-level architecture of a management system that manages a moving platform relay and includes provision for satellite terminal management. The system may manage transitions between base station and satellite for the moving platform.
FIG 26 depicts the high-level architecture of a management system that manages a satellite network, including satellite and gateway.
FIG 27 depicts the high-level architecture of a management system that manages a group of base stations and the satellite network management system. The system may manage transitions between base station and satellite for a moving platform.
FIG 28 depicts base station antennas collocated with a cell phone tower and blockage between one of the base station antennas and a moving platform.
FIG 29 depicts a base station with multiple base station antennas, each with an associated field of view.
FIG 30 outlines a general method to transition from a first to second base antenna for a given base station to maintain moving platform communication service continuity- make before break.
FIG 31 outlines a general method to transition from a first to second base antenna for a given base station to maintain moving platform communication service continuity- break before make.
FIG 32A through D depict a beam hopping scenario for a base station antenna serving 4 airplanes.
FIG 32E depicts the timing and frequency allocation for the beam hopping scenario, described in FIG 32A through D.
FIG 33 depicts the a representative antenna plot with a sidelobe mask and indicates 3-, 20, 25-, and 30-dB beam widths.
FIG 34A depicts a base station antenna beam, and imposes 3-, 20, 25-, and 30 dB beam widths on the base station service area.
FIG 34B depicts a base station with 3 co-frequency antenna beams 312-1, 312-2, and 312-3, and imposes their beam pattern on a base station area, if the minimum separation between beams is defined as the 25-dB beam width.
FIG 35 depicts the high-level architecture for the LBSMS, including interference management module.
FIG 36A depicts a 4-color wireless communication system with multiple base stations for a single polarization system.
FIG 36B depicts a 4-color wireless communication system with multiple base stations for a dual polarization system.
FIG 37 depicts the high-level architecture for the MBSMS, including interference management module.

### DETAILED DESCRIPTION

The usefulness and ease of accessing information, while on the move, has created tremendous growth in the wireless telecommunications industry. Users may access information for emergency situations, where health and safety are at risk, urgent matters, where quick decisions are required, and normal daily life, where relatively quick decisions are for sake of convenience. Service providers with their networks and hardware manufacturers with their devices have enabled end users to access information not only at their desks and in the comfort of their homes, but also while on foot, in automobiles, trucks, and trains, on boats and ships, and on airplanes. Still, there is unevenness to the quality and speed of mobile networks, with that unevenness often related to the available capacity of the network. Available capacity for a service area is often impacted by the service provider's cost of implementing the network, and the service provider's estimate of required demand and revenue associated with the network.

Service providers connect users to a network, such as the Internet, via a base station to enable users to access information that they are not able to carry. End users generally bring their own devices, and service providers build or lease base stations, which may be connected to a network and are generally fixed. Base stations may include baseband, IF, RF, digital, antenna, and other hardware and a management device. Service providers design base stations to deliver power and bandwidth to end-users and balance competing requirements of coverage extent/service area and capacity and signal strength. Greater coverage extent for a base station means that signals may be weaker, and capacity may be reduced; smaller coverage extent means that signals may be stronger, and capacity may be increased. The antenna technology, employed by base stations and end-user devices or relays for end-user devices employ, may impact coverage extent and capacity for a given transmitterpower.

User devices with omni-directional antennas may receive and transmit communication signals anywhere, as long as the device is in range of a base station, which may be cellular or Wi-Fi. Omni-directional antennas may be especially low-cost and need not require orientation in a specific manner toward a base station, so a mobile user need only be in range of a base station to obtain a communication service. In cases where user devices are out of range from base stations, it may be convenient to install a relay node, which is in range of the user device, and connect the relay node to a base station or gateway, which is connected to a network of interest, such as the Internet. A connection between the relay and the base station may be wired or wireless. In the case of a wireless connection, a directional antenna for the relay may be higher cost than an omni-directional antenna and may need to beoriented such that it points toward a base station to obtain wireless connectivity with the base station. The directional antenna for the relay may extend the range between the relay and base station in comparison to the range associated with an omni-directional antenna, and the range extension may provide economic benefits.

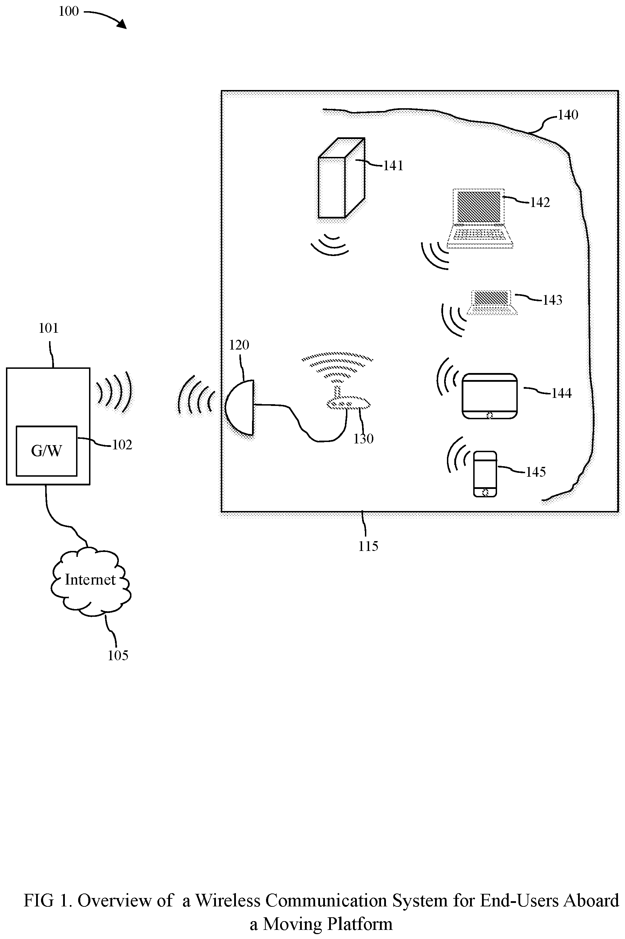

For end-users aboard a mobile platform and whose devices are nominally out of range of a base station, it may be feasible to provide connectivity via a relay, which may be installed on the moving platform, as indicated in FIG 1. Base station 101 and relay 120, which is on board moving platform 115, may transmit and receive signals, in accordance with a wireless standard, such as 3G, 4G, LTE, 5G, other cellular standard, 802.11, or other wireless standard. Relay 120 may be communicatively coupled to wireless router 130 on board moving platform 115, and wireless router 130 may be communicatively coupled with an end-user device 140, including desktop computer 141, laptop computer 142, notebook 143, tablet 144, smartphone 145, or other device. Moving platform 115 may be an automobile, truck, boat, ship, airplane, high altitude platform station, such as a balloon or airship, or other moving vehicle. Base station 101 may include a gateway 102, which may beconnected to network and the network may be the Internet 105. The system depicted may provide a communication service for end-users on board moving platform 115 and enable the end-users to connect to a network, such as the Internet, to access information that they are notable to carry with them. Herein, a communication service for end-users on board a moving platform may be used interchangeably with a communication for a moving platform.

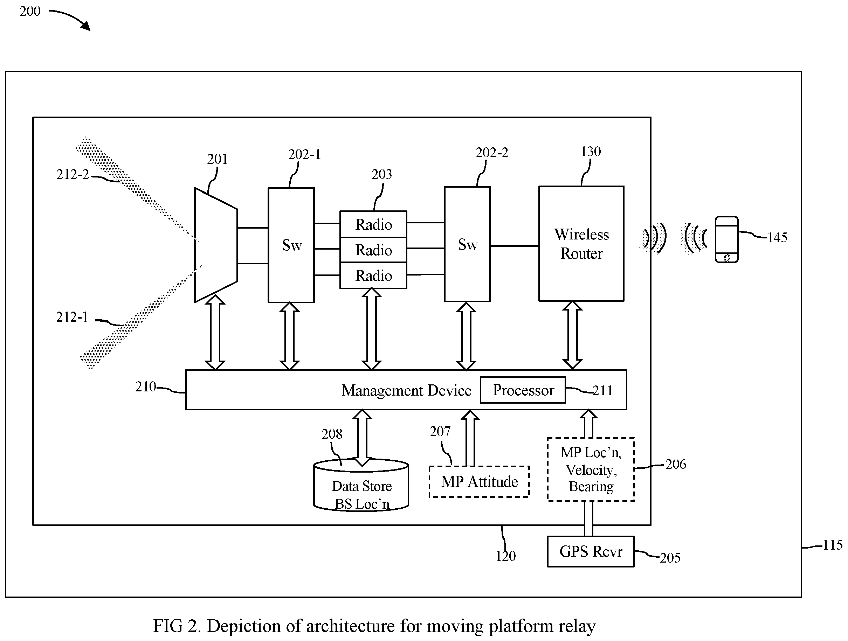

FIG 2 depicts the high-level architecture for the moving platform relay 120. A multi-beam antenna system generates antenna beams 212, which may be commanded to point at a given location, such as a base station. Antenna inputs and outputs may be communicatively coupled to a set of switches 202, which may be communicatively coupled to radios 203, which may be Wi-Fi, cellular, or other type of radio. Radios 203 may perform receive, transmit, or receive and transmit functions. While FIG 2 shows wireless router 130 as part of the relay, in some embodiments, the wireless router may be external to the relay.

Moving platform 115 may include GPS receiver 205 to obtain moving platform latitude, longitude, altitude (platform location), velocity, and/or bearing 206. Platform location, velocity, and bearing, along with platform attitude (pitch, roll, and yaw) 207 may be communicatively coupled to moving platform relay management device 210. Platform location, velocity, and bearing at a known instance in time may be used to predict or estimate platform location at a future time. This function may be implemented in a platform position propagator. As new measurements for platform location, velocity and bearing are acquired, the estimate for platform location may be updated. Data store 208, which may hold files of base station locations and relay configuration, may be communicatively coupled to management device 210. The platform relay management device 210 may take moving platform location 206 and attitude 207 inputs and stored base station locations to generate commands for antenna 201 to point beams 212 at a given location. The management device 210 may also control switches 202, radios 203, and wireless router 130 and provide updates to data store 208 for base station locations and relay configuration files. Management device 210 may also contain processor 211 to perform service monitoring, service requests, base station transition, and other functions.

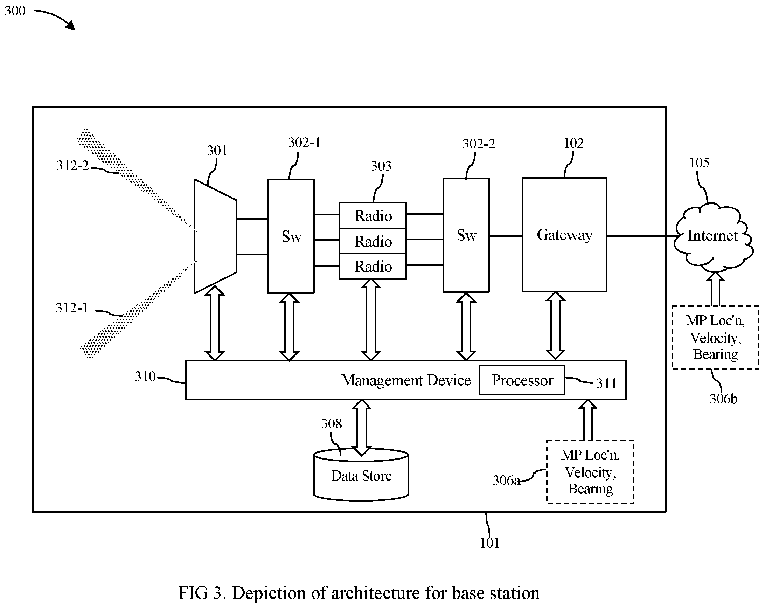

FIG 3 depicts the high-level architecture for the base station 101. A multi-beam antenna system 301 generates antenna beams 312, which may be commanded to point at a given location, such as a moving platform. Antenna outputs may be communicatively coupled to a set of switches 302, which may be communicatively coupled to radios 303, which may be Wi-Fi, cellular, or other type of radio. Radios 303 may perform transmit, receive, or transmit and receive functions. Moving platform location, velocity, and bearing 306 may be communicatively coupled to base station management device 310. Moving platform location information 306 may be obtained at the base station (306a) or be delivered from an external network, such as a private network or the Internet (306b). Data store 308, which may hold files of base station and moving platform relay configuration, may be communicatively coupled to management device 310. The base station management device310 may take moving platform location 306 inputs to generate commands for antenna 301 topoint beams 312 at a given moving platform. The management device 310 may also control switches 302, radios 303, and gateway 102 and provide updates to data store 308 for base station configuration files. Gateway 102 may be communicatively couple to an external network, such as the Internet 105 or private network. Management device 310 may also contain processor 311 to perform service monitoring, service provisioning, base station transition, and other functions.

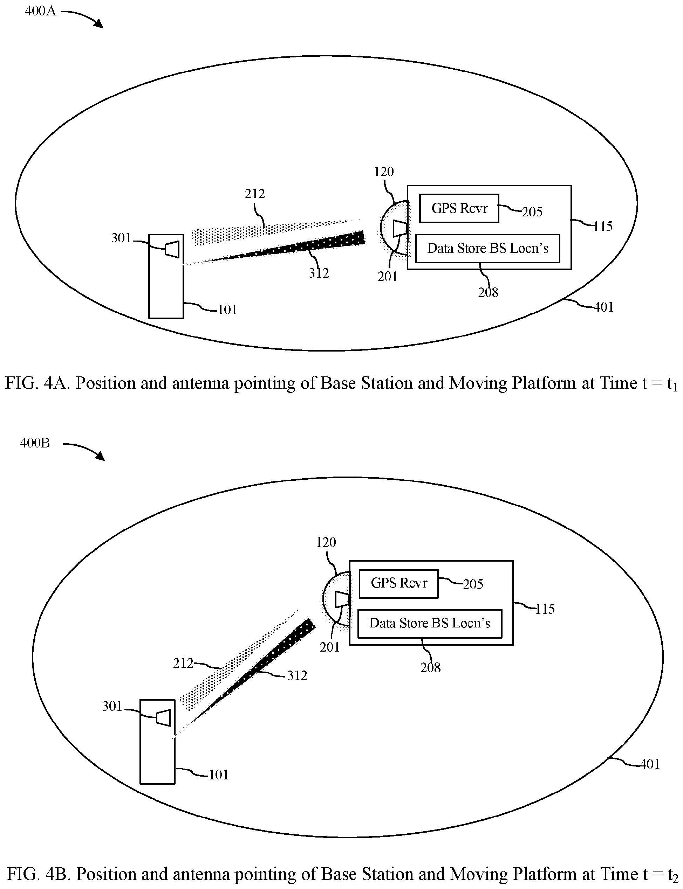

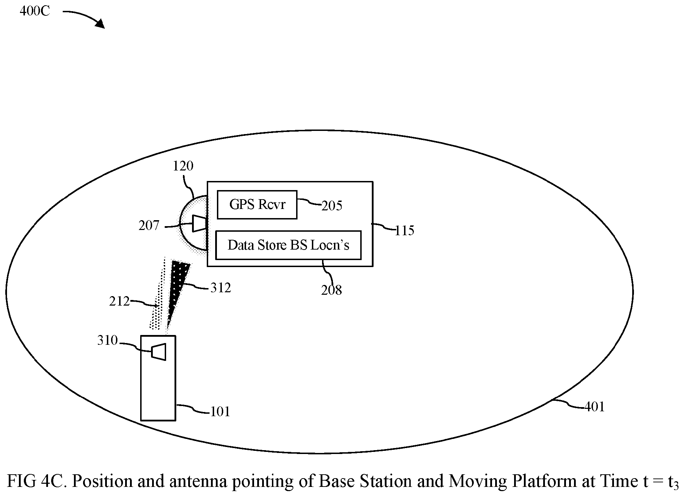

The antenna technology, employed by a base station and relay for end-user devices, may impact the service area, which is the area over which a base station can provide connectivity to a moving platform, and capacity for a given transmitter power for the base station and relay. Use of directional antennas in a base station and relay may require beam pointing agility in the base station and relay to keep the base station antenna beam pointed at the moving platform and the relay antenna beam pointed at the base station, to maintain a wireless connection between base station and relay as the platform moves, as indicated in FIGS 4A, 4B, and 4C, which show the location of moving platform 115 at three distinct times, ti, 12, and t3. Base station 101 is fixed and has service area 401. FIGS 4A, 4B, and 4C depict the pointing of directional antenna beams 212 and 312, which are generated by movingplatform relay antenna 201 and base station antenna 301, respectively, at times ti, 12, and t3. As moving platform 115 changes its location, antenna beams 212 and 312 must be re-pointed to ensure that they are aimed at the base station and moving platform, respectively. While FIGS 4A, 4B, and 4C show 3 distinct beam cases, it is understood that while platform 115 is moving between locations depicted in FIGS 4A, 4B, and 4C, pointing updates for beams 212 and 312 may be performed to point beam 212 at base station 101 and beam 312 at moving platform 120. Update rate for beam pointing may depend on the velocity of moving platform 115 and beam widths of beams 212 and 312. Higher platform speeds or narrower beams may require more frequent updates. Agile antennas may be implemented with a multitude of fixed directional antennas, an electronically steered phased array antenna, a multi-beam lens antenna, a mechanically steered directional antenna, and other antenna design to perform basestation and moving platform tracking, which is required to maintain the wireless connection between the base station and relay, as the moving platform moves. The term steerable may refer to beam steering and may reference the steering of the beam (e.g., energy) radiating from an antenna.

An electronically steerable phased array antenna, a beam switchable lens antenna, and a mechanically steerable antenna are among some of the techniques to obtain an agile directional antenna. The choice of antenna technology in a wireless communication system may be influenced by cost and the amount of capacity that the antenna is required to deliver. A phased array antenna, made up of a number of array elements, may be implemented with adjustable analog phased shifters and analog attenuators to control the amplitude and phase of the array elements to cause a beam to steer. Such beam steering is very interesting for mobility and other applications, because there are no moving parts and array RF power may be spread over many hundreds or even thousands of elements, thereby reducing the maximum power that an individual element must provide. Phased array antennas also exhibit graceful degradation; if an element or a few elements fail, the antenna performance is impacted minimally. Phased array antennas may be designed to generate many beams, and this may be of great interest in applications in which antenna mounting area resources are scarce and many beams are required. Phased array antennas with digital beamforming may generate hundreds or even thousands of beams. The flexibility in beamforming and quantity of beams that a phased array antenna offers usually comes at a significant cost, because of the high quantity of array modules that must be produced and integrated into antenna system. A 60 cm antenna is a small size antenna at Ka-band (20 GHz,with wavelength = 1.5 cm and half-wavelength= 0.75 cm), and such an antenna would require about 5000 elements. Even if an individual module in such a Ka-band antenna couldbe produced and integrated into the antenna for $50, which may be a significant underestimate of its actual cost, the antenna cost would be about $250,000. For many applications, transmit and receive functions are separated into 2 separate antennas, and the resulting antenna system may cost greater than $500,000. A phased array antenna generally covers a field of view of+/- 120° in azimuth, so iffull 360° coverage is required, then 3 sets of transmit and receive antennas are necessary, and the cost may exceed $1,500,000. The phased array is a technically attractive solution for many applications, but its cost may make it economically unfeasible for applications in which a limited number of beams is required.

A multi-element lens antenna, such as a Rotman lens, Luneburg lens, squashed Luneburg lens, or other lens antenna also relies on beam forming, which is the variation of the amplitude and phase of an **RF** carrier across the array elements. Adjustment of the amplitude and phase of the RF signal at each array element in a prescribed manner maysteer an antenna beam toward a desired location, and like the electronically steerable phased array antenna, has no moving parts. In a lens antenna, the beams are pre-formed in a beam former section, and a switching network between the beam ports and the array elements is used to select which beams are active. A lens antenna may provide less beam steering flexibility than an electronically scannable phased array antenna, which may reduce cost. Still a 60 cm (circular) antenna at Ka-band would require about 3000 elements.

The determination of whether an electronically scanned phased array antenna, lens antenna, or other type of antenna is economically feasible may be determined by the number of beams that are required at a given base station and the quantity of communications traffic that passes through the antenna under peak and typical loading. A phased array or lens antenna may be compared to other means of generating agile antenna beams for a similar level of peak and typical communication traffic. In the case where lots oftraffic may be evenly disbursed among a wide geographical area, a phased array or lens antenna may offer the ability to form many simultaneous beams to provide connectivity to all the end users, who may be generally distributed equally across the wide geographic area. However, if at peak and typical loading for a given base station, the users, served by the basestation, are on board a single moving platform or a small number of moving platforms, the users will not be distributed evenly across a wide geographic area - instead, they will be concentrated in one or a few regions across the wide geographic area that may be served by the base station. An antenna system, which provides the required number of beams and steering agility and is simpler than a phased array or lens antenna, may result in a more economical antenna and base station design. The well-known parabolic antenna may be a simple inexpensive antenna that is capable of providing a high-performance beam. Some antenna suppliers have designed a mechanically steerable reflector antenna, which may be mounted on a mobile platform. In many applications, the mechanically steerable antennas may track a satellite, while the platform moves, and the satellite may be a geostationary (GEO), mid-earth orbit (MEO), or low-earth orbit (LEO) satellite. The tracking ensures continuity of communications is maintained, while the platform is in motion. A mechanicallysteerable antenna may be installed in a base station to provide beam steering agility necessaryto track moving platforms and maintain continuity of communications between a base station and a moving platform.

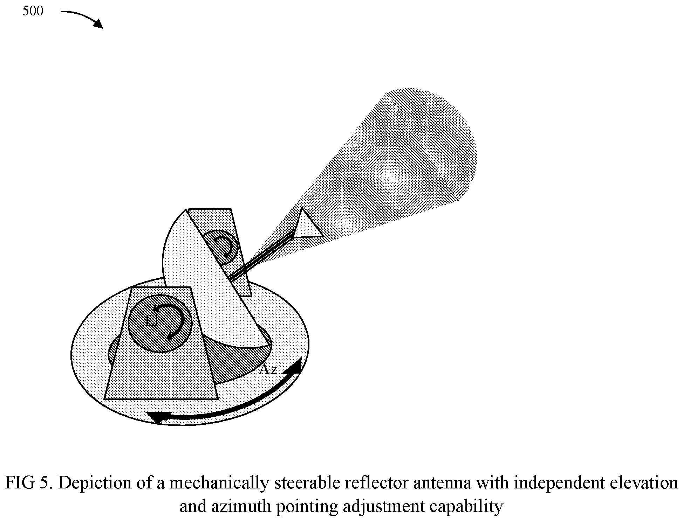

FIG 5 provides a depiction of a mechanically steerable antenna, which comprises a reflector, feed, motor for azimuth rotation, and motor for elevation adjustment and generates a single beam. The entire reflector and feed assembly may rotate about an axis that is parallel to the ground to obtain elevation pointing adjustment capability (from horizonto straight up), and the entire antenna assembly may rotate on a base to obtain azimuth adjustment capability. With azimuthal and elevation steering, the antenna beam can be pointed anywhere or nearly anywhere in a hemisphere. The mechanically steerable antenna may also be designed to operate over both the receive and transmit bands in a communications system, so that a single antenna assembly can generate the receive and transmit beam for a communications system terminal. A mechanically steerable antenna may cost an order of magnitude or more less than a phased array antenna, and if the traffic pattern for the users served by a given base station is such that a given base station serves only handful of moving platforms at most, then a mechanically steerable antenna may be a suitabletechnical and economic choice to obtain the required beam pointing agility for a base station.

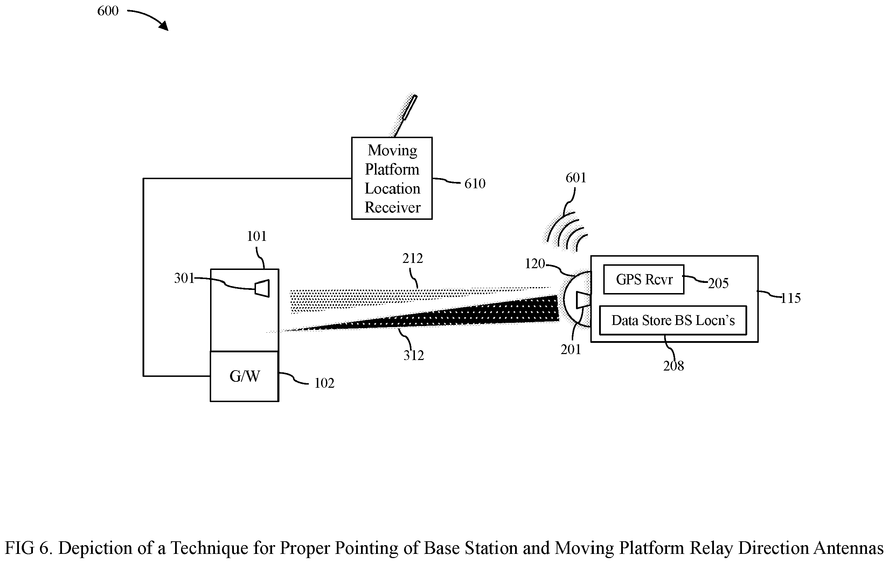

One of the difficulties in implementing a wireless communication system fora moving platform with directional antennas in both the (fixed) base station and (moving) relay is obtaining knowledge of the moving platform location to point properly the directional antennas in the base station and moving platform relay. FIG 6 shows a technique, which may enable communications between a moving platform and a base station. GPS receiver 205 on board moving platform 115 may provide the location of the platform to relay 120 on board the platform. Base station locations, including the location of base station 101, may be storedon board the moving platform in data store 208, and with knowledge of its own location, relay 120 on board the moving platform may be able to aim beam 212 of directional antenna 201 at base station 101, and as the platform moves, relay 120 on board moving platform 115 may update relay antenna beam 212 pointing, so that the relay tracks base station 101. The moving platform may broadcast 601 its location and base station 101 may employ a moving platform location receiver 610, which processes messages transmitted by moving platform 115, and those processed messages may be delivered to gateway 102 in base station 101, if moving platform receiver 610 is remote from base station 101. With the knowledge of moving platform 115 location, base station 301 may be able to cause directional antenna 301 to aim beam 312 in the direction of moving platform 115.

Base station 101 may employ a tracking antenna system, based on received signal strength or based on a nulling antenna system, to maintain antenna beam 312 pointing toward moving platform 115, while the moving platform is in motion. Moving platform position receiver 610 may be used to provide a general pointing solution for base station antenna beam 312, and the tracking system may be used to point antenna beam 312 toward moving platform 115 with additional precision. Those skilled in the art of antenna tracking systems may be able to optimize a system with a moving platform position receiver and tracking antenna that provides beam pointing updates for base antenna beam 312.

For the case where the moving platform is an aircraft, the Automatic Dependent Surveillance-Broadcast (ADS-B) system may be used to assist with moving platform and base station antenna pointing. The FAA is requiring aircraft, with very limited exceptions, to include **ADS-B** transmitters as of January 1, 2020. **ADS-B** transmitters transmit aircraft location, including latitude, longitude, and altitude, velocity, heading, and other information up to several times per minute. Around the world, many country's regulators are also requiring **ADS-B** systems on board aircraft. **ADS-B** is currently widely used, and in the near future its lack of use will be extremely rare, so a wireless communication system for aircraft, which employs directional antennas, may be able to use information derived from an aircraft's **ADS-B** transmissions, which are available to anyone with an inexpensive **ADS-B** receiver and require no licensing, to point a base station directional antenna toward the aircraft and update the pointing as additional **ADS-B** messages are received and processed by the base station. An **ADS-B** receiver may be collocated with a base station. An **ADS-B** receiver may also be remote from a base station, since the range for an **ADS-B** transmission may exceed 250 km. In the case of a remote **ADS-B** receiver, the pertinent content of the **ADS-B** messages may be relayed via a network to a base station, to assist with proper pointing of the base station directional antenna.

A radar or other system, created by those skilled in the art of ranging, direction finding, and geo-location, whose outputs are communicatively coupled to a networkmay also be used to provide moving platform location to a base station and a moving platform. Such a system may provide the moving platform location inputs, which enable directional base station and moving platform antennas to point toward each other to establish a wireless communication link.

It has been demonstrated that, with knowledge of base station and moving platform locations, directional antennas in the base station and moving platform may be pointed at each other, and their respective pointing may be updated (based on updated estimates of the moving platform location) to maintain pointing toward each other as the moving platform moves. Use of directional antennas may enable the use of commercially available high power amplifiers (HPAs) and low noise amplifiers (LNAs) in the base station and moving platform to achieve suitable signal strength and sensitivity levels for effective communications over large ranges. Generally, higher ranges for effective communications between a base station and a moving platform result in a system that requires fewer base stations and may reduce cost in comparison to systems with lower ranges.

The choice of directional antenna technology for the moving platform may depend on cost, size, weight, drag, and other factors. The antenna may be required to adaptto changes in the platform location and may also have to adapt to changes in the platform orientation toward the base station. The antenna may be mounted on the bottom, belly, or sides of a moving platform to generate beams that may be steered toward a base station. A single or multi-beam electronically steered phased array antenna or a single or multi-beam lens antenna may be utilized to steer a moving platform toward a base station and accommodate the motion of a moving platform. A combination of single or multi-beam phased array and single or multi-beam lens antennas may be implemented to accommodate the motion of the moving platform with respect to the base station. A mechanically steerablemay also be utilized to steer an antenna beam toward a base station. A combination of an electronically steered and a mechanically steered antenna may also be used on moving platform to steer an antenna beam toward a base station. A mechanically steerable antenna may be less expensive than a phased array antenna.

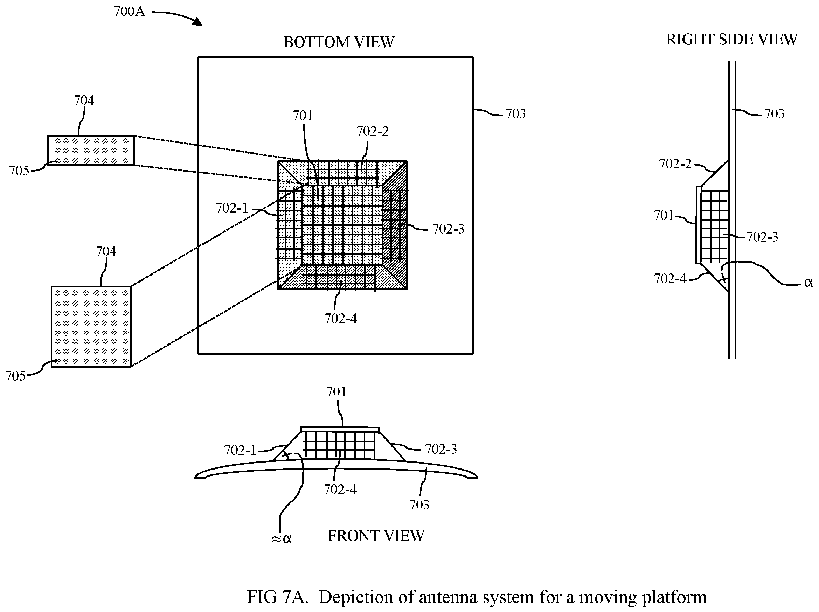

The moving platform antenna may be designed to be conformal or nearly conformal to the moving platform body to provide low aerodynamic drag for the moving platform. FIG 7A shows 3 views, with respect to a moving platform, of an antenna system that may be mounted onto the belly of a moving platform. The figure contains a depiction of a number of phased array or lens antennas, which may be affixed to the bottom of a moving platform. Antenna 701 is generally parallel to moving platform body 703, and there are 4 antennas, which protrude from the moving platform at an angle a. The number of protruding antennas may be different from 4. It will be shown later that the combination of an antenna approximately parallel to the moving platform body and an antenna, which protrudes from the moving platform body, may enable more effective communications between the moving platform and base station over a wide range of distances between the moving platform and base station and a wide range of moving platform orientations toward a base station.

The design approach may also permit the use of inexpensive printed circuit fabrication techniques in the manufacture of antenna 701. To the left of the BOTTOM VIEW and FRONT VIEW depictions in FIG 7A is a depiction of an example construction of antenna701, which is comprised of a number of microstrip patch radiators 705 printed on one side of **PCB** 704. Antenna 702 may be constructed in a similar fashion with microstrip patch radiators 705, printed on **PCB** 704. The transmit and receive circuits may reside "behind" the radiating elements, a design approach common in phased array antennas for communications and radar applications.

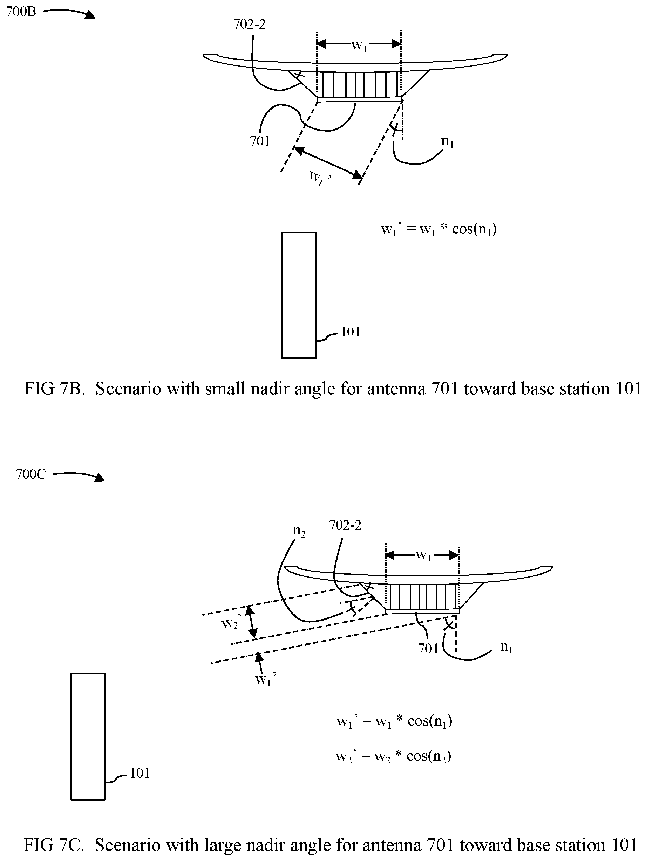

The effective area, directivity, and gain of an antenna on a moving platform toward a base station will depend on the nadir angle of the antenna toward the moving platform, where the nadir angle is defined as the angle between a vector that is normal to the antenna mounted on the moving platform and a base station. The nadir angle between the moving platform and the base station will depend on the location of the moving platform with respect to the base station, and effective area and gain of an antenna in a direction varies as a function of the cosine of the nadir angle. When the moving platform is nearly or directly overhead of a base station, the nadir angle of the antenna toward the moving platform approaches 0°, and the effective area of antenna 701 toward base station 101 is at or close to a maximum, the gain antenna 701 towards base station is at or close to the maximum gain the antenna may provide, as depicted in FIG 7B.

FIG 7C depicts a scenario in which the nadir angle (nl) for antenna 701 toward base station is large. The projection of antenna width toward base station 101 (w1') is significantly reduced compared to its native width (w1), and the area of antenna 701 in the direction of base station 101 is significantly reduced. The reduced effective area of antenna 701 toward base station 101, results in a significant reduction in maximum available gain ofantenna 701 towards base station 101. If this reduction is excessive, then communications between the moving platform and may be significantly impaired. Though increasing antenna 701 area may increase antenna gain to compensate for extremely low nadir angles, such an approach may substantially increase the cost of the antenna.

Adding a modest-sized phased array or lens antenna 702, which protrudes from moving platform body 703 at predetermined angle a, as depicted in FIG 7A, may be a design approach which permits effective communications between a base station and movingplatform across a wide range of moving platform nadir angles (toward a base station). Antenna 702 may provide sufficient effective area, directivity, and gain toward the base station to permit effective wireless communication between the moving platform and base station, when the nadir angle for moving platform antenna 701 is low, as depicted in FIG 7C. While the orientation of moving platform antenna 701 towards base station 101 is not favorable from an nadir angle point of view, antenna 702, because of how it is installed on the moving platform, may have a more favorable geometry for base station 101 and experience a tolerable reduction in effective area and gain toward base station 101, since nadir angle n2 < n1, The combination of antenna 701 and antenna 702 may provide sufficient antenna gain for the moving platform relay toward the base station for a large range of moving platform nadir angles toward a base station. Antenna 702 may also provide sufficient antenna gain, when the moving platform attitude changes substantially from level (with the ground), such as during banked turns.

It may be feasible to mount multiple phased array antennas on different sidesor different parts of the moving platform to accommodate a variety of moving platform nadir angles and attitudes toward a base station. For cases in which multiple base stations provide a communication service to a moving platform, such as during a base station transition from a first base station to a second base station, the moving platform antenna system may employ multiple beams from multiple antennas.

A communication service for end-users on a moving platform, may adhere to any wireless protocol or standard such as, for example, an 802.11 Wi-Fi standard, and employ Wi-Fi routers in the base station and moving platform. A communication service for end- users on a moving platform, may adhere to any communication standard or cellular standard such as LTE, 4G, 5G, or other cellular standard and employ cellular radios in the base station and moving platform.

The base station and moving platform relay elements may be managed to initiate and maintain a communication service for an end user on board the moving platform, ensure the end user is provided with an acceptable experience and Quality of Service (QoS), and maximize network throughput, whether the system is implemented using Time Division Duplex (TDD) or Frequency Division Duplex (FDD) techniques. The communications between an end-user and a network, to which a base station is connected, may be 2-way. Content, such as a web page or a video, may be stored on a server in the network and may bedelivered to the end-user, and the data stream, which contains the content that is delivered from a network to an end-user, is referred to as the forward link. Requests for content originate with the end-user (the mouse-clicks) and may be delivered to a destination in the network such as a website, and the data stream, which contains the requests from the end- user, is referred to as the return link.

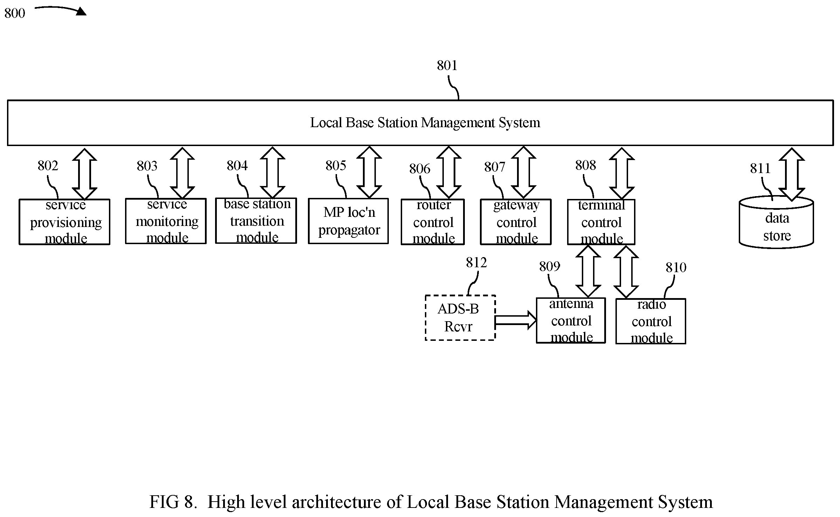

FIG 8 depicts the high-level architecture of the Local Base Station Management System **(LBSMS)** 801, which may manage and control base station communications and base station hardware. The **LBSMS** may issue commands for active hardware selection and configuration and switch setting to permit the desired connections for the base station antennas and radios. In the case of a hardware failure, a receiver, for instance, the **LBSMS** may command the base station to take the failed receiver offline and activate and bring a spare receiver online to take the place of the failed receiver. The **LBSMS** may also be responsible for service provisioning 802, service monitoring 803, base station transition 804, updating estimate of moving platform location 805, and router control 806. Gateway and associated gateway control module 807 may assist in communication between the local base station and an external network, including the Internet. Terminal control 808 may include antenna control 809 and radio control 810 functions. Antenna control module 809 may be used to point a directional antenna beam at a moving platform and maintain proper pointing as the platform moves. Antenna control module 809 may accept a direct input from an **ADS-B** receiver co-located with the base station. An **ADS-B** message from a moving platform that is served by the base station may be processed by the **ADS-B** receiver, and the output may be used to point an antenna beam toward the moving platform that is associated with the **ADS-B** message. Antenna control module 809 may control a mechanically steerable, phased array, lens antenna, or other antenna in the base station, and in the case where a base station may serve multiple moving platforms, antenna control module 809 may control multiple antennas and/or multiple beams emanating from a single antenna. In the case of a base station with multiple antennas, each antenna may have its own local antenna control module. Radio control module 810 may control a radio and connectivity between a base station antenna and a radio. Radio control module 810 may also control a high power amplifier (HPA), low noise amplifier (LNA), frequency translator, and other hardware to which an antennas is communicatively coupled. The radio control module may identify faulty or failed hardware in the terminal and activate spare hardware to replace faultyor failed hardware. The **LBSMS** may contain a data store 811 for storage of a configuration file, which may include terminal, gateway, router, and other configuration files for a particular communication service.

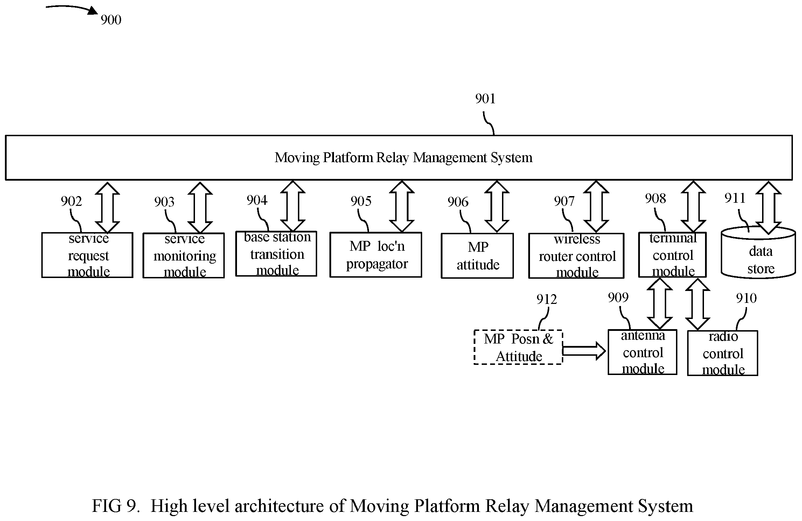

FIG 9 depicts the high-level architecture of the Moving Platform Relay Management System **(MPRMS)** 901, which may manage and control moving platform communications and moving platform relay hardware. The MPRMS may issue commands for active hardware selection and configuration and switch setting to permit the desired connections for the moving platform relay antennas and radios. In the case of a hardware failure, a receiver, for instance, the **MPRMS** may command the moving platform relay to take the failed receiver offline and activate and bring a spare receiver online to take the place of the failed receiver. The MPRMS may also be responsible for issuing service requests 902, service monitoring 903, manage and control a wireless router, and process estimates of moving platform location 905 and attitude 906 to control the moving platform antenna system. Terminal control 908 may include antenna system control 909 and radio control 910functions. Antenna control module 909 may be used to point a directional antenna beam at abase station and maintain proper pointing as the platform moves. Antenna control module 909 may control multiple beams in the moving platform relay and may accept inputs regarding moving platform location and attitude to point an antenna beam at a base station. Radio control module 910 may control a radio and the connectivity between a moving platform relay antenna beam and a radio. Radio control module 910 may also control a high power amplifier (HPAs), a low noise amplifier (LNAs), a frequency translator, and other hardware to which an antennas may be communicatively coupled. The radio control module may identify faulty or failed hardware in the terminal and activate spare hardware to replace faulty or failed hardware. Base station transition module 904 may be used with terminal control module 908, antenna control module 909, and radio control module 910 to maintain communication service continuity, while a moving platform transitions from a first base station to a second base station. The MPRMS may contain a data store 911 for storage of configuration files, which may include base station location, antenna, radio, router, and other configuration files for a particular communication service. Base station location coordinates may also be transmitted to the moving platform.

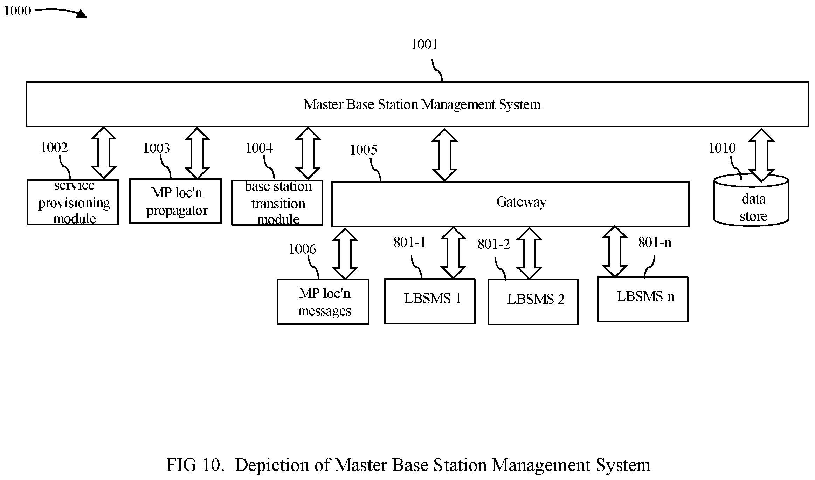

FIG 10 depicts the architecture of the Master Base Station Management System **(MBSMS)** 1001. The **MBSMS** may perform (local) base station allocation and selection for a moving platform, including the determination of which base station may servea given moving platform over a given time interval. The **MBSMS** may also orchestrate communication service transitions for base stations, as a moving platform moves from the service area of one base station to the service area of another base station. The **MBSMS** may collect and process moving platform location messages 1006, which may originate on a moving platform or be based on radar measurements of a moving platform. For a moving platform, which is an aircraft, the aircraft location messages may be **ADS-B** messages.

The **MBSMS** may also be responsible for service provisioning 1002 and updating the estimate of a moving platform location 1003. The **MBSMS** may be communicatively coupled to a **LBSMS** 701, systems that provide moving platform location messages 1006, and external networks via a gateway 1005. The regional base station management may share or receive moving platform location information from a **LBSMS.** The **MBSMS** may be used to manage a communication service for a moving platform, which is provided from multiple base stations. The multiple signals, relayed from the base stations,may be independent or provide communication service redundancy for end-users on the moving platform. The **MBSMS** may contain a data store 1010 for storage of configuration files, which may include gateway, (local) base station, moving platform, and other configuration files for a particular communication service.

The MPRMS may coordinate beam-pointing updates in the electronically steered phased array antenna and/or the Rotman lens antenna on board a moving platform, and the LBSMS may coordinate beam pointing updates for an antenna in a base station. The portion of the communication service between the base station and the moving platform may be TDD or FDD, and there may be pauses or gaps in signal transmission from and receptionon the moving platform. The gaps in transmissions from the base station to the moving platform, also called the forward link, may occur naturally in a TDD system or be introduced by the base station in a FDD system, and in the gaps in the forward link, moving platform receive antenna beam pointing may be updated by updating amplitude and phase coefficients for the individual elements of a moving platform conformal receive phased array antenna or by updating amplitude and phase coefficients for the individual elements of a moving platform non-conformal receive phased array antenna or by beam selection in a Rotman lens receive antenna.

The gaps in transmissions from the moving platform to the base station, also called the return link, may occur naturally in a TDD system or be introduced by the moving platform in a FDD system, and in the return link transmission gaps, moving platform transmit beam pointing may be updated by updating the amplitude and phase coefficients for the individual elements of a moving platform conformal transmit phased array antenna or by updating amplitude and phase coefficients for the individual elements of a moving platform non-conformal transmit phased array antenna or by updating beam selection in a non- conformal Rotman lens transmit antenna. The base station management system and moving platform management system may coordinate forward link and return link transmission gaps to ensure beam-pointing updates do not cause excessive bit errors.

Similarly, transmission gaps in forward and return links for a moving platform may occur naturally or be introduced by the MPRMS to permit pointing updates fora mechanically steered antenna on board the moving platform.

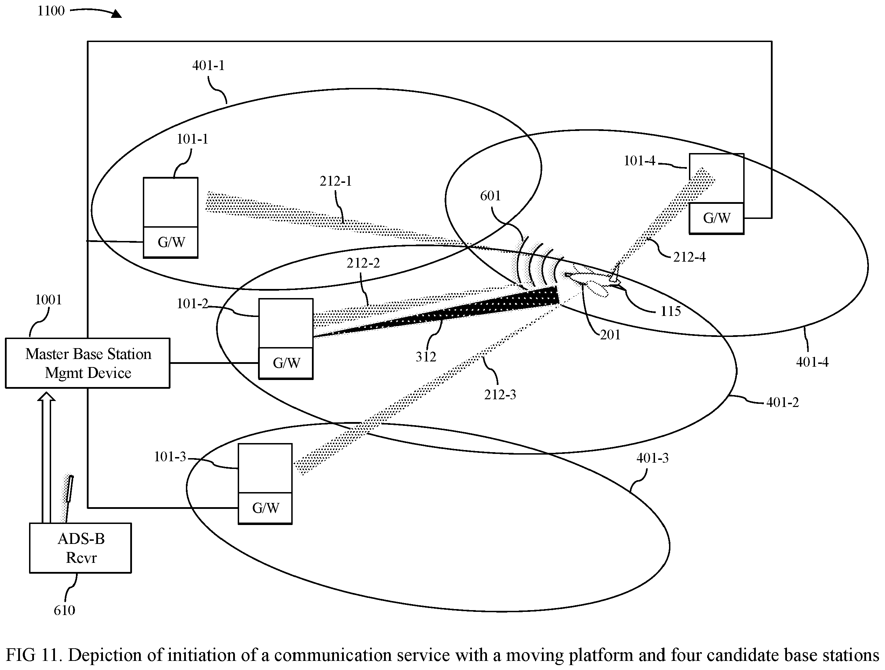

FIG 11 depicts an example of the initiation of a communication service for moving platform 115, which in this example is an airplane. The airplane 115 may issue aircraft location broadcasts 601, which are **ADS-B** messages, several times per minute. Ground receiver 610 may receive the broadcasts 601, which contain latitude, longitude, altitude, ground speed, climb rate, bearing, and other data and the information may be relayedto a master base station management device, 1001. In this example, ground position receiver610 may be an **ADS-B** receiver, and in other embodiments of the invention, an alternative receiver may be implemented. Master base station management device 1101 may have connectivity to base station 101-1, 101-2, 101-3, and 101-4 and may process airplane 115 location and other data and may instruct base station 101-2 to provide connectivity to airplane 115. The relay on board airplane 115 may not yet know which base station will provide connectivity and may form beams 212-1, 212-2, 212-3, and 212-4 for base stations 101-1, 101-2, 101-3, and 101-4, respectively. The relay on airplane 115 may know its location and attitude and the coordinates for 4 of the closest base stations (101-1, 101-2, 101-3, and 101-4)and may generate and steer beams 212-1, 212-2, 212-3, and 212-4 toward these base stations. The airplane may listen for signals on each beam to determine which base station may provide connectivity. In this example, master base station management device 1101 may select base station 101-2, perhaps because airplane 115 may have just entered base station 101-2 service area 401-2 and may be expected to travel in service area 401-2 for a time duration that exceeds the duration for the other base station service areas, and base station 102-2 may transmit a service initiation message to the relay on board airplane 115 via a radio that may be communicatively coupled to beam 312. The radio on board airplane 115 that may be communicatively coupled to beam 212-2 may receive the service initiation message from base station 101-2, and communication service may be initiated for the end-users on board airplane 115. In this example, the moving platform may be an airplane, and the generalservice initiation steps may be similar for other types of moving platforms, such as automobiles, trucks, trains, buses, boats, and ships.

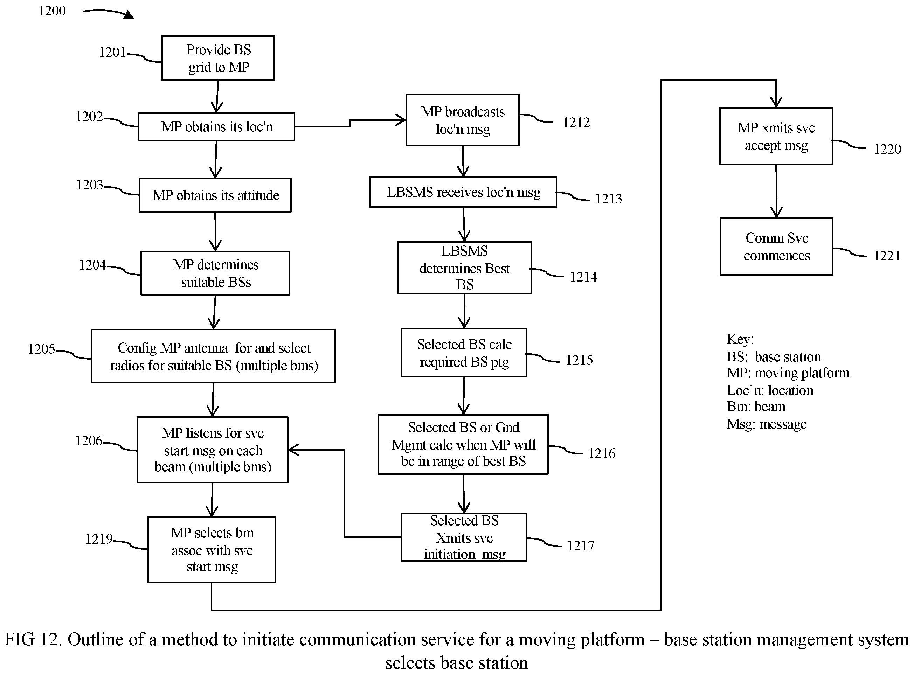

FIG 12 outlines a general example method 1200 to initiate a communication service for a moving platform ("MP" in this and other figures) via base station ("BS" in this and other figures). While the figure (and other figures in this specification) includes many steps, not all steps are required in each implementation of the invention. Such a communication service may be, for example, connectivity to a private network, a local area network, the Internet, an intranet, a cellular network such as a 3G, 4G, 4G LTE, LTE or 5G network, other radio network, the PLMN, the PSTN, a component of a Wi-Fi hotspot, or any other network. Applications of a communication service may be for streaming video, linear television, web browsing, e-mail, or other data transmittal and/or retrieval. The method begins at blocks 1201, 1202, and 1203 in which coordinates for a base station are provided to a moving platform, the moving platform obtains its location, and the moving platform obtainsits attitude, respectively. In block 1204, the moving platform determines which base stations may be candidates for a communication service, and in block 1205 the moving platform antennas may be configured to generate beams that point in the direction of the candidate base stations.

Continuing with FIG 12 in block 1212 moving platform location messages are broadcast, and in block 1213 the ground system receives the location messages and determines the most suitable base station for a communication service in block 1214. The criteria for most suitable base station determination may be based on base station available capacity, estimated moving platform distance from the base station, estimated carrier-to-noise ratio (C/N), estimated duration of base station connectivity, and other criteria. In block 1215,the selected base station points an antenna beam in the direction of the moving platform and calculates, when the moving platform will be in range of the selected base station in block 1216, and then transmits a communication service initiation message in block 1217. The moving platform receives the service initiation message and identifies which beam to use in block 1206, transmits a service acceptance message in block 1220, and a communication service is initiated in block 1221.

Embodiments of the invention may include a non-transitory computer-readable storage medium storing computer-readable instruction set that, when executed by a processor of a computing device, causes the computing device to perform operations outlinedin method 1200 in FIG 12. Those skilled in the art appreciate that method 1200 provides an exemplary implementation method for initiating a communication service for a moving platform and is one of a multitude of similar methods. For instance, it may be possible to combine or adjust the order of the blocks in method 1200 in other embodiments of the invention described herein.

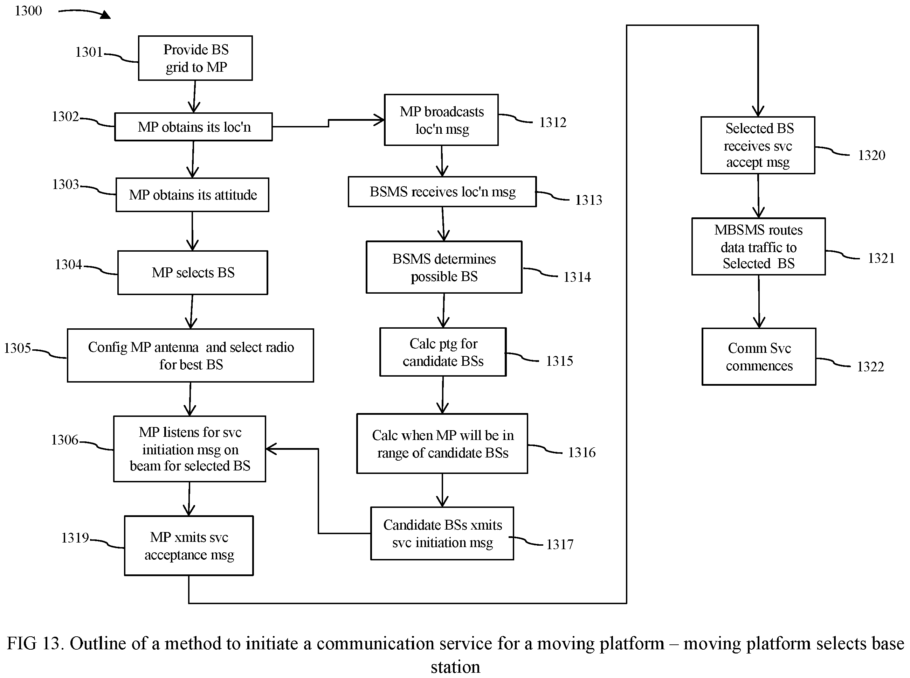

FIG 12 depicted a communication service initiation method, in which the base station management system determined the best base station. In the FIG 12 method, the moving platform formed multiple beams and listened to determine which base station the ground system may use for the communication service. In the method outlined in FIG 13, the moving platform selects the base station.

FIG 13 outlines a general example method 1300 to initiate a communication service for a moving platform via a base station. While the figure (and other figures in this specification) includes many steps, not all steps are required in each implementation of the invention. Such a communication service may be, for example, connectivity to a private network, a local area network, the Internet, an intranet, a cellular network such as a 3G, 4G, 4G LTE, LTE or 5G network, other radio network, the PLMN, the PSTN, a component of a Wi-Fi hotspot, or any other network. Applications of a communication service may be for streaming video, linear television, web browsing, e-mail, or other data transmittal and/or retrieval. The method begins at blocks 1301, 1302, and 1303 in which a set of base station coordinates may be provided to a moving platform, the moving platform may obtain its location, and the moving platform may obtain its attitude, respectively. In block 1304, the moving platform may determine and select the best base station for a communication service,and in block 1305 a moving platform antenna may be configured to generate a beam that maypoint in the direction of the selected base station. The criteria for most suitable base station determination may be based on base station available capacity, estimated moving platform distance from the base station, estimated carrier-to-noise ratio (C/N), estimated duration of base station connectivity, and other criteria.

Continuing with FIG 13 moving platform location messages may be broadcast in block 1312, and in block 1313 the ground system may receive the location messages and determine candidate base stations for a communication service in block 1314.In block 1315, candidate base stations may point an antenna beam in the direction of the moving platform and calculate, when the moving platform will be in range of the candidatebase stations in block 1316, and then may transmit a communication service initiation message in block 1317. The moving platform may receive the service initiation message inblock 1306 and may transmit a service acceptance message in block 1319 on the selected base station beam. In block 1320, the ground system may identify the selected base station, based on the moving platform transmission in block 1319, and may route data traffic to the selected base station in block 1321, and a communication service is initiated in block 1322.

Embodiments of the invention may include a non-transitory computer-readable storage medium storing computer-readable instruction set that, when executed by a processor of a computing device, causes the computing device to perform operations outlinedin method 1300 in FIG 13. Those skilled in the art appreciate that method 1300 provides an exemplary implementation method for initiating a communication service for a moving platform and is one of a multitude of similar methods. For instance, it may be possible to combine or adjust the order of the blocks in method 1300 in other embodiments of the invention described herein.

Furthermore, it may be possible to combine blocks and portions of methods 1200 and 1300 to develop an efficient and cost-effective communication service initiation method for a moving platform in other embodiments of the invention.

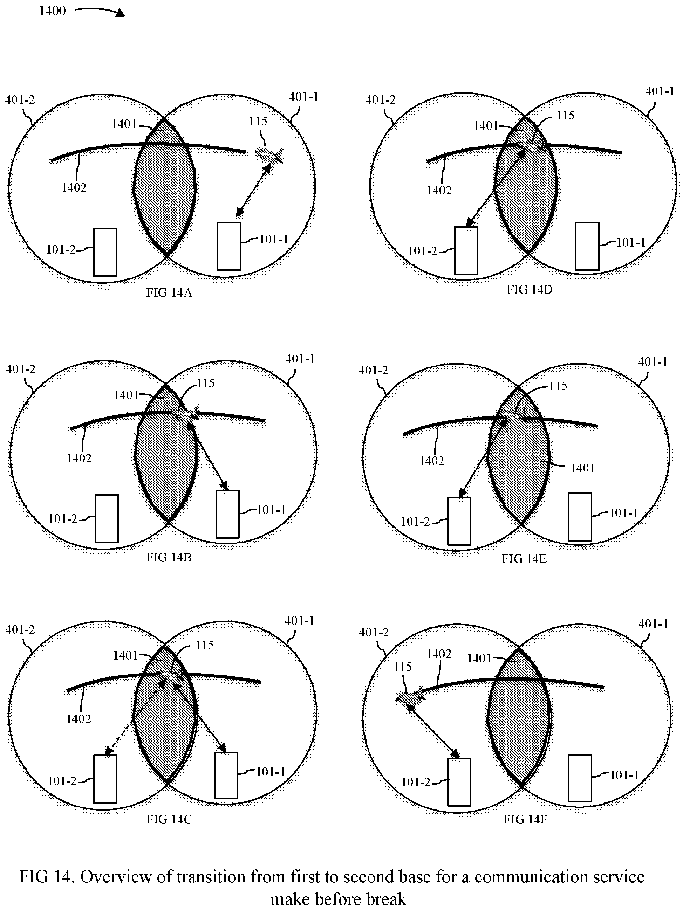

FIG 14 provides an overview of a communication service transition from a first base station to a second base station for a moving platform. FIG 14A depicts the movingplatform as an airplane, and the moving platform may also be an automobile, truck, bus, train, boat, ship, or other moving platform. Moving platform 115 may be provided a communication service from base station 101-1, while the platform is in base station 101-1 service area 401-1. The service area 401-2 for base station 101-2 may be adjacent to service area 401-1, and there may be an overlap region 1401 for service areas 401-1 and 401-2. The projected path of moving platform 115 is indicated by 1402 and may traverse service area 401-1, 401-2, and overlap region 1401.

In FIG 14B, moving platform 115 enters transition region 1401 and may still obtain a communication service from base station 101-1. In FIG 14C, moving platform 115 may travel further into transition region 1401. Moving platform 115 may be served by base stations 101-1 and 101-2 and connectivity between moving platform 115 and base station 101-2 may be prepared, as indicated by the dashed line in FIG 14C. In FIG 14D, moving platform 115 may travel further into transition region 1401 and may obtain its communicationservice from base station 101-2; connectivity between moving platform 115 and base station 101-1 may be deactivated. In FIG 14E, moving platform 115 may still be in the transition region and may obtain its communication service from base station 101-2, and in FIG 14F, the moving platform may exit transition region 1401 and may be in service area 401-2 and may continue to obtain its communication service from base station 101-2.

Prior to the base station transition, moving platform 115 may obtain its communication service from base station 101-1. During the transition, moving platform 115 may obtain a communication service from base station 101-1, while service with base station 101-2 may be prepared, and once service is established with base station 101-2, connectivity with base station 101-2 may be deactivated, and there may be no outage of service during the base station transition. Fallowing the base station transition, moving platform 115 may obtain its communication service from base station 101-2. Because there may be no outage in communication service for moving platform 115 before, during, and after the base station transition, the transition may be referred to as make before break.

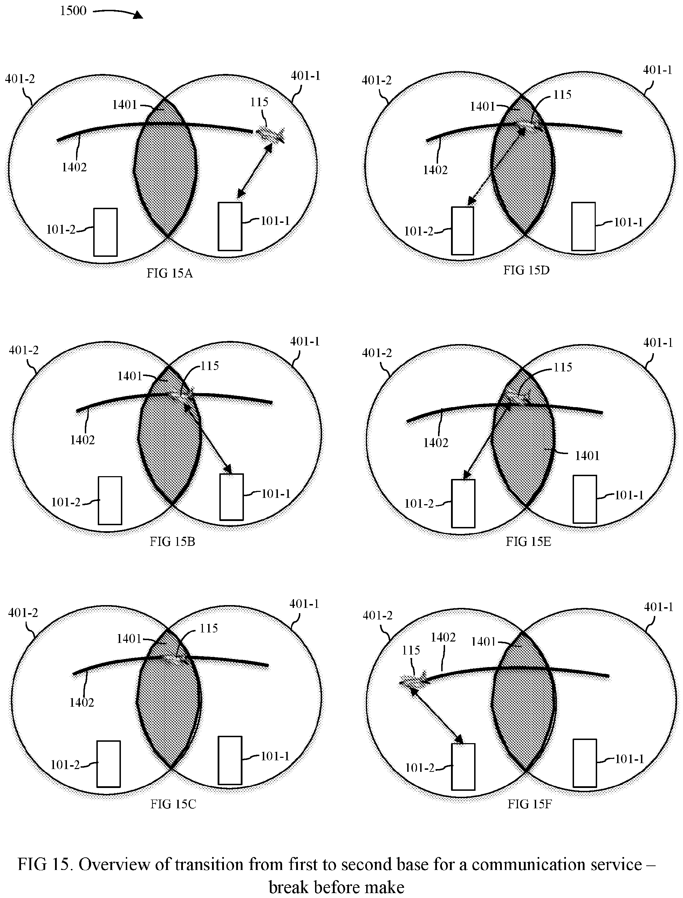

FIG 15 provides an overview of a communication service transition from a first base station to a second base station for a moving platform. FIG 15A depicts the movingplatform as an airplane, and the moving platform may also be an automobile, truck, bus, train, boat, ship, or other moving platform. Moving platform 115 may be provided a communication service from base station 101-1, while the platform may be in base station 101-1 service area 401-1. The service area 401-2 for base station 101-2 may be adjacent to service area 401-1 and there may be an overlap region 1401 for service areas 401-1 and 401-2. The projected path of moving platform 115 may be indicated by 1402 and may traverseservice area 401-1, 401-2, and the overlap region 1401.

In FIG 15B, moving platform 115 may enter transition region 140 I and may still obtain a communication service from base station 101-1. In FIG 15C, moving platform 115 may travel further into transition region 140 I and the connectivity between the moving platform and base station 101-1 may be de-activated, and there may be a service outage for moving platform 115 after the deactivation. Connectivity between moving platform 115 and base station 101-2 may be prepared in FIG 15D, as indicated by the dashed line in FIG 15D, and once connectivity is established, the communication service may resume for moving platform 115, as indicated by the solid line in FIG ISE. In FIG ISF, the moving platform may exit transition region 1401 and may be in service area 401-2 and may continue to obtainits communication service from base station 101-2. The duration of the communication service outage for moving platform 115, during the communication service transition from base station 101-1 to 101-2, from may depend in part on the amount of time, which elapses between the termination of connectivity between moving platform 115 and base station 101-land the preparation of connectivity between moving platform 115 and base station 101-2. This duration may be negligible in some implementations of the invention described herein. The duration of the communication service outage for moving platform 115 may also dependin part on the amount of time that elapses between the preparation for connectivity between moving platform 115 and base station 101-2 and the establishment of a communication service between moving platform 115 and base station 101-2.

Prior to the base station transition, moving platform 115 may obtain its communication service from base station 101-1. During the transition, connectivity between moving platform 115 and base station 101-1 may be deactivated and moving platform 115 may have no communication service (from either base station 101-1 or 101-2), so there may be an outage of service, during the base station transition. The duration of the outage may beshort, since soon after the deactivation of connectivity with base station 101-1, moving platform 115 establishes connectivity with base station 101-2 to resume the communication service. Fallowing the base station transition, moving platform 115 may continue to obtain its communication service from base station 101-2. Because there may be an outage in communication service for moving platform 115 during the base station transition, the transition may be referred to as break before make.

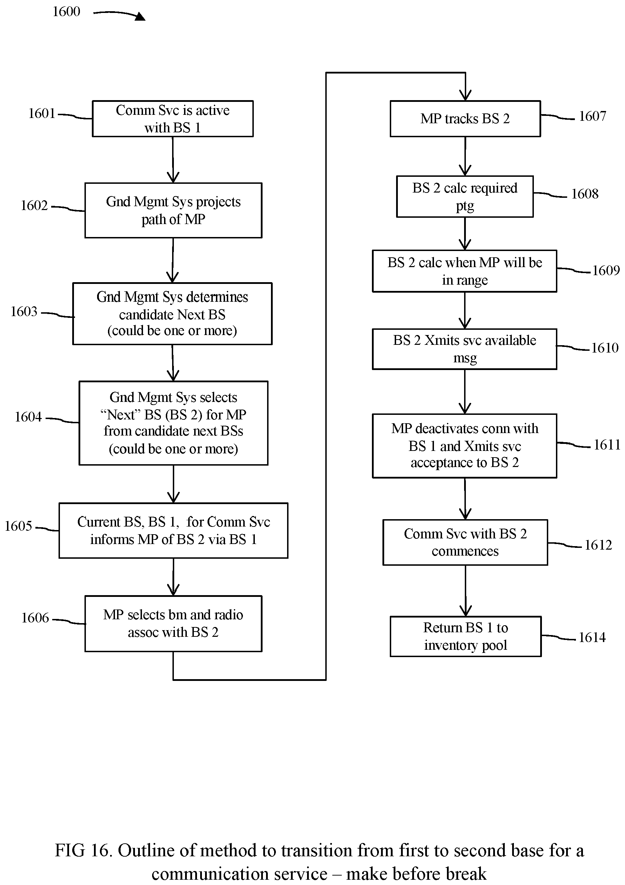

FIG 16 outlines a general example method 1600 to transition a communication service for a moving platform via base station from a first base station to a second base station. While the figure (and other figures in this specification) includes many steps, not all steps may be required in each implementation of the invention. Such a communication service may be, for example, connectivity to a private network, a local area network, the Internet, an intranet, a cellular network such as a 3G, 4G, 4G LTE, LTE or 5G network, other radio network, the PLMN, the PSTN, a component of a Wi-Fi hotspot, or any other network. Applications of a communication service may be for streaming video, linear television, web browsing, e-mail, or other data transmittal and/or retrieval. The method begins at block 1601, wherein a communication service for a moving platform may be established, and the service may use base station 1. The communication service via base station 1 may be established by following method 1200, outlined in FIG 12, method 1300 outlined FIG 13, or some other method. In block 1602, the ground management system mayproject the path of the moving platform, and the projection may be based on estimates of moving platform location, velocity, and bearing. The ground management system may determine a candidate next base station, base station 2, in block 1603 for continuing the communication service for the moving platform, and multiple base stations may be considered. In block 1604 the ground management system may select base station 2 to continue a communication service after the moving platform leaves the service area of base station 1. The criteria for suitable next base station determination and selection may be basedon base station available capacity, estimated moving platform distance from the base station,estimated carrier-to-noise ratio (C/N), estimated duration of base station 2 connectivity, and other criteria.

Continuing with FIG 16, in block 1605 base station 1 may inform the moving platform, which base station (base station 2) may be used to continue the communication service with the moving platform, via a transmission from base station 1, which may be the current base station for the communication service. Since the moving platform may possess the locations of all the base stations, and since the moving platform may possess knowledge of its location, velocity, bearing, and attitude, the moving platform relay may select a beam and radio to provide connectivity to base station 2 in block 1606. In block 1607, a moving platform relay antenna beam may track base station 2, and in block 1608, a base station 2 antenna beam may track the moving platform, and base station 2 may calculate, when the moving platform will be in range of base station 2 in block 1609. In block 1610 base station 2 may transmit a service available message to the moving platform;in block 1611 the moving platform may deactivate connectivity with base station 1 and maytransmit a service acceptance message. In block 1612 the communication service for the platform is maintained with the moving platform utilizing base station 2. In block 1614, basestation 1 is returned to the system capacity inventory and is made available for another moving platform. While the moving platform and base station 2 have been preparing for base station 2 to continue the communication service with the moving platform after the moving platform exits the service area associated with base station 1, the communication service may be provided by base station 1. The base station and moving platform antenna tracking functions may be obtained by mechanical, electronic, or a combination of mechanical and electronic steering of the base station and moving platform antenna beams. Those skilled in the art of antenna design and implementation may choose the most cost-effective methods of obtaining agile antenna pointing.

Transition method 1600 outlined in FIG 16 is referred to as make before break, because connectivity is established (make) with base station 2 prior to deactivating connectivity (break) with base station 1. A make before break transition may minimize communication service outage for a moving platform.

Embodiments of the invention may include a non-transitory computer-readable storage medium storing computer-readable instruction set that, when executed by a processor of a computing device, causes the computing device to perform operations outlinedin method 1600 in FIG 16. Those skilled in the art appreciate that method 1600 provides an exemplary implementation method for base station transitions for a communication service for a moving platform and is one of a multitude of similar methods. For instance, it may be possible to combine or adjust the order of the blocks in method 1600 in other embodiments of the invention described herein. While FIG 16 outlined a method in which the ground management system selected a second base station to continue a communication service with a moving platform as it exits the service area of a first base station, a method could be devised in which the moving platform may perform the selection of the second base station.
Herein, it has been demonstrated in method 1300 that a moving platform may select a base station for initiation of a communication service; other embodiments of the invention may provide for a moving platform to select a second base station to maintain communication service continuity after it leaves the service area of a first base station.

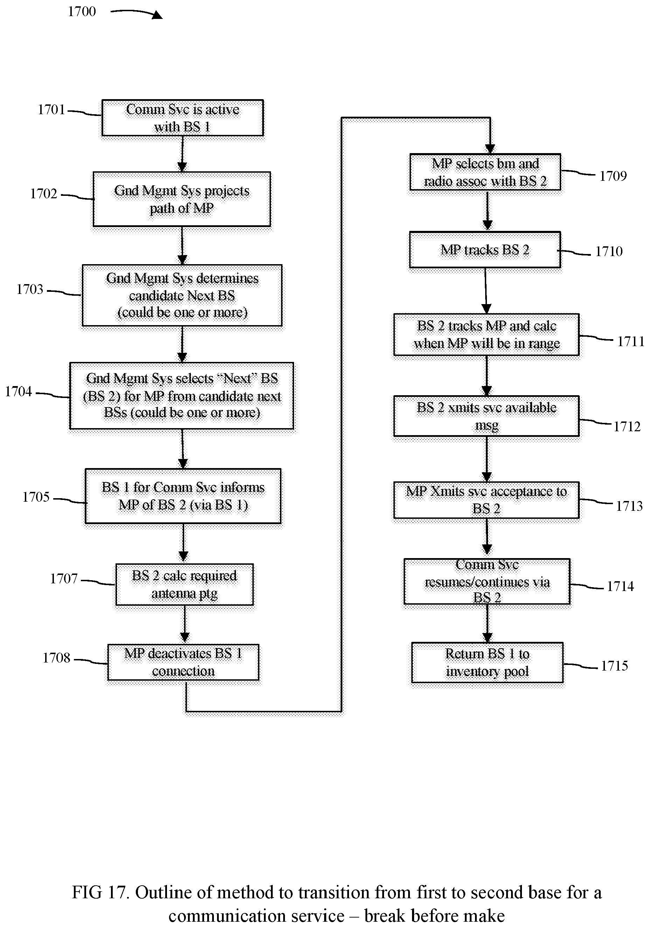

FIG 17 outlines a second general example method 1700 to transition a communication service for a moving platform via base station from a first base station to a second base station. While the figure (and other figures in this specification) includes many steps, not all steps are required in each implementation of the invention. Such a communication service may be, for example, connectivity to a private network, a local area network, the Internet, an intranet, a cellular network such as a 3G, 4G, 4G LTE, LTE or 5G network, other radio network, the PLMN, the PSTN, a component of a Wi-Fi hotspot, or any other network. Applications of a communication service may be for streaming video, linear television, web browsing, e-mail, or other data transmittal and/or retrieval. The method begins at block 1701, wherein a communication service for a moving platform has been established, and the service uses base station 1. The communication service via base station 1 may be established by following method 1200, outlined in FIG 12, method 1300, outlined in FIG 13, or some other method. In block 1702, the ground management system may project the path of the moving platform, and the projection may be based on estimates of moving platform location, velocity, and bearing. The ground management system may determine a candidate next base station, base station 2, in block 1703 for continuing the communication service for the moving platform, and multiple base stations may be selected. In block 1704 the ground management system may select base station 2 from the candidate base stations to continue a communication service after the platform may no longer be served by base station 1. The criteria for suitable next base station determination and selection may be based on base station available capacity, estimated moving platform distance from the basestation, estimated carrier-to-noise ratio (C/N), estimated duration of base station 2 connectivity, and other criteria.

Continuing with FIG 17, in block 1705 base station 1 may inform the moving platform, which base station (base station 2) may be used to continue the communication service with the moving platform, via a transmission from base station 1, which may be the current base station for the communication service. In block 1707, the basestation may select a base antenna and calculate the required base station antenna pointing to track the moving platform. In block 1708 the connection between moving platform and base station 1 may be deactivated, and in block 1709, the moving platform may prepare for establishing a connection with base station 2. Since the moving platform may possess the locations of all the base stations, and since the moving platform may possess knowledge of itslocation, velocity, bearing, and attitude, the moving platform relay may select a beam and radio to provide connectivity to base station 2 in block 1709. In block 1710, the moving platform may track base station 2, and in block 1711 base station 2 may track the moving platform and calculate, when the moving platform may be in range of base station 2. In block 1712 base station 2 may transmit a service available message and in block 1713 the moving platform may transmit a service acceptance message. In block 1714 the communication service may be resumed with base station 2 providing connectivity to the moving platform. In block 1715, base station 1 may be returned to the system capacity inventory and madeavailable for another moving platform.

There may be a communication service outage between the events in which connectivity between the moving platform and base station 1 is deactivated (block 1708) and connectivity between the moving platform and base station 2 is established (block 1714).

The base station and moving platform antenna tracking functions may be obtained by mechanical, electronic, or a combination of mechanical and electronic steering of the base station and moving platform antenna beams. Those skilled in the art of antenna design and implementation may choose the most cost-effective methods of obtaining agileantenna pointing.

Transition method 1700 outlined in FIG 17 is referred to as break before make, because connectivity may be terminated with a first base station 1 (break) prior to establishing connectivity with a second base station (make). A break before make transition may minimize the complexity of a base station transition for a moving platform, and when the outage duration is small, may have negligible impact on the overall service.

Embodiments of the invention may include a non-transitory computer-readable storage medium storing computer-readable instruction set that, when executed by a processor of a computing device, causes the computing device to perform operations outlinedin method 1700 in FIG 17. Those skilled in the art appreciate that method 1700 provides an exemplary implementation method for base station transitions for a communication service for a moving platform and is one of a multitude of similar methods. For instance, it may be possible to combine or adjust the order of the blocks in method 1700 in other embodiments of the invention described herein. While FIG 17 outlined a method in which the ground management system selected a second base station to continue a communication service with a moving platform as it exits the service area of a first base station, a method could be devised in which the moving platform may perform the selection of the second base station. Herein, it has been demonstrated in method 1300 that a moving platform may select a basestation for initiation of a communication service; other embodiments of the invention mayprovide for a moving platform to select a second base station to maintain communication service continuity after it leaves the service area of a first base station.

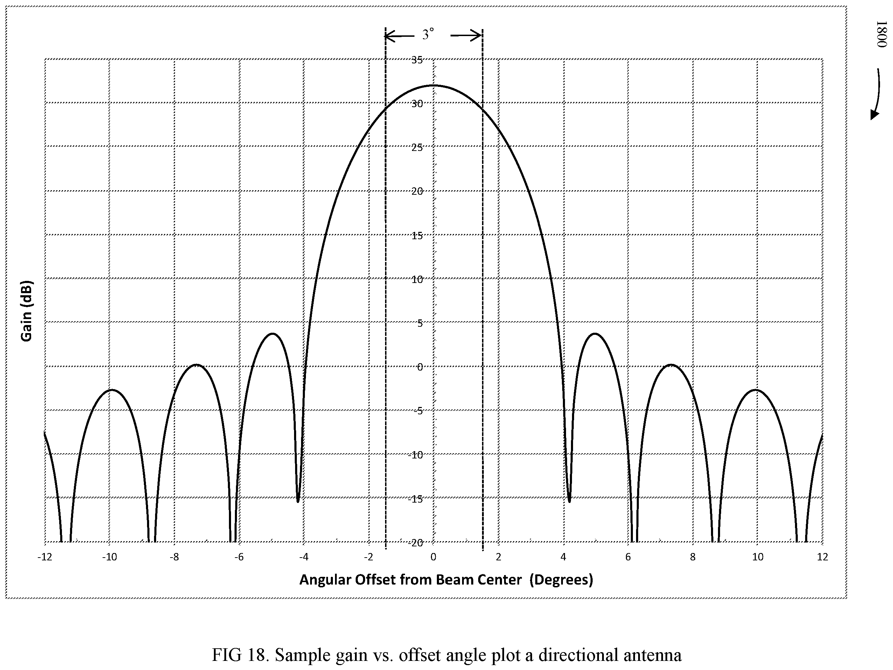

A communication service for a moving platform, employing directional antennas, requires updates to antenna pointing. As discussed earlier, benefits of a directional antenna include greater range, lower HPA power, and higher sensitivity. Directional antennasmay also provide reduced off-axis interference in comparison to an omni-directional antenna with similar EIRP, where off-axis refers to angles off antenna bore site, at which a directional antenna has peak gain. Lower off-axis interference may enable frequency re-use and boost the amount of capacity a system may provide for a given frequency allocation from regulatory bodies. FIG 18 provides a sample plot of gain vs. offset angle for an example directional antenna. For the example antenna, the peak gain is 32 dB, and the 3-dB beamwidth is approximately 3 degrees. The plot shows 3 side lobes on each side of the main beam. In a communication system, while a target is within the 3-dB beamwidth, it may not be necessary to re-point the directional antenna, but for targets outside the 3-dB beamwidth, or thereabouts, signal strength for a communication link may become too low, and it may become necessary to re-point the directional antenna, such that the target is within the 3-dB beamwidth. For narrower high-gain beams, it may be necessary to perform the pointing updates more frequently than for wider lower-gain beams. The pointing updates may be implemented by electronic adjustments of phase and amplitude coefficients for an array antenna or may be implemented by updating the state of motors in a mechanically steered antenna. In a lens antenna, updates to pointing may be made by selecting a different RF paththrough the lens.

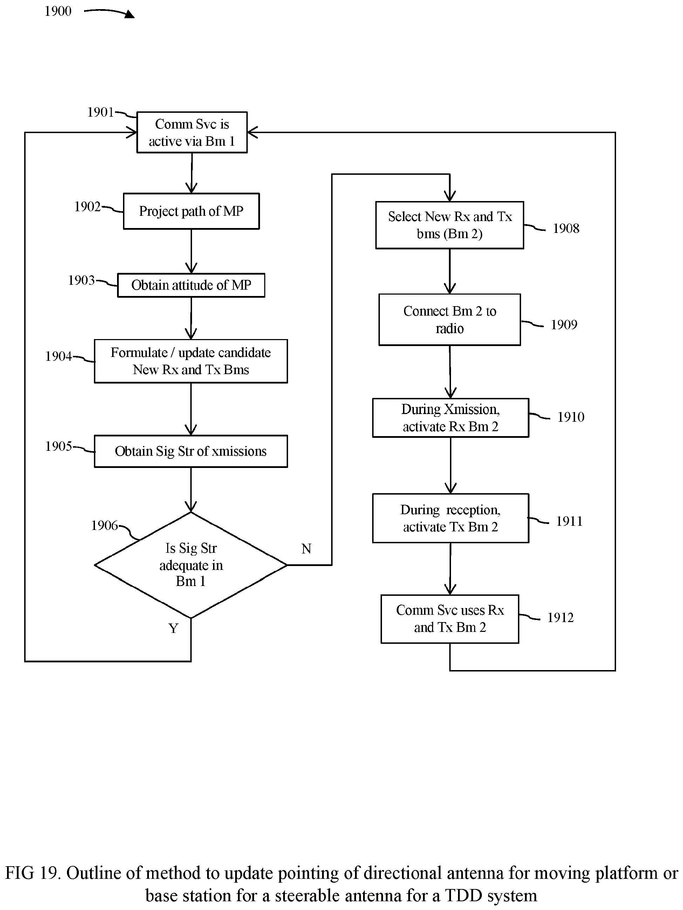

FIG 19 outlines a general example method 1900 to update pointing for a directional antenna for a TDD communication service for a moving platform via base station. The directional antenna may reside in a moving platform or base station. While the figure (and other figures in this specification) includes many steps, not all steps may be required in each implementation of the invention. In a **TDD** system, the return and forward links may occupy different time slots of a communications channel. The forward and return links may use the same frequency, and while the channel may carry the forward link (data stream to the moving platform), the return link (data stream from the moving platform) may be inactive and vice versa. The method refers to beam 1, which is the current beam that is utilized for the communication service and beam 2, which is the candidate beam which may provide the communication service, if the service cannot be adequately supported by beam 1 (the current beam). Beam 1 may also be referred to as transmit and receive beam 1, and beam 2 may also be referred to as transmit and receive beam 2.

The method starts in block 1901, in which a communication service may be provided, and the service may by enabled by a directional antenna, which generates beam 1. In blocks 1902 and 1903, the path of the moving platform may be projected, and the attitude of the platform may be obtained, respectively. Block 1903 may not be required for a fixed platform, such as a base station, since a base station generally does not change its orientation or attitude with respect to a fixed point. A solution for a new receive and transmit beam may be calculated in block 1904. For a phased array antenna, the solution may provide the amplitude and phase coefficients for the array elements. For a mechanically steered antenna,the solution may provide the inputs for motor control. For a lens antenna, the solution may provide selection of RF path through the lens. In block 1905, the radio to which beam **1** is communicatively coupled, may perform a signal strength measurement for the signal that isreceived in beam **1** (and is associated with the communication service), and in block 1906 a determination may be made as to whether transmit and receive beam **1** (the current receive and transmit beam) may continue to be used or if a new transmit and receive beam (beam 2)may be used. If the determination is that the signal strength in beam **1** is adequate, then the cycle may return to block 1901 and blocks 1901 through 1906 are repeated.

If at block 1906 the determination is made that the signal strength is not adequate, then in block 1908 a new transmit and receive beam (beam 2) may be selected and connected to a radio in block 1909. While the radio is transmitting, the pointing update for receive beam 2 may be implemented in block 1910, and while the radio is receiving, the pointing update for transmit beam 2 may be implemented in block 1911, and the communication service may utilize the new beam, transmit and receive beam 2. The pointing updates in blocks 1910 may be implemented by changing the amplitude and phase coefficients of array elements in a phased array antenna, selection of an alternative RF path in the lens of a lens antenna, or adjustment of mechanical devices in a mechanically steerable antenna. The system returns to block 1901, and the process is repeated, and beam 2 may be referred to as beam **1.** Implementing the pointing updates for the transmitting beam, while the radio may be receiving, and for the receiving beam, while the radio may be transmitting, may reduce or eliminated dropped communication service packets and minimize or eliminate retransmissions and make the network more efficient. For the case of a mechanically steered antenna, the pointing updates may be implemented without regard for variable attenuators and phase shifters to settle and reach a quiescent state, as there may be no variable attenuator or phase shifter circuits. The beam pointing update method may be implemented for a moving platform and base station in the antenna control module in **LBSMS** and **MPRMS,** respectively. The beam pointing modules in the **LBSMS** and MPRMS may be used in conjunction with base station transition modules to assist with communication service handovers from a first base station to a second base station for a moving platform.

Embodiments of the invention may include a non-transitory computer-readable storage medium storing computer-readable instruction set that, when executed by a processor of a computing device, causes the computing device to perform operations outlinedin method 1900 in FIG 19. Those skilled in the art appreciate that method 1900 provides an exemplary implementation method for beam pointing updates for directional antennas for a communication service for a moving platform and is one of a multitude of similar methods.For instance, it may be possible to combine or adjust the order of the blocks in method 1900in other embodiments of the invention described herein. Method 1900 and associated variations may be applied to a directional antenna on a moving platform or in a base station.

In a communication system, there may be 2 links, link 1 and link 2, to relay signals between 2 points, point A and point B, and in an FDD system the links may occupy different frequency bands and may be transmitted simultaneously. In link 1, point A may transmit a signal to point B, so in link 1, point B may receive a signal transmitted from point A In link 2, point B may transmit a signal to point A, so in link 2, point A may receive a signal transmitted from point B.

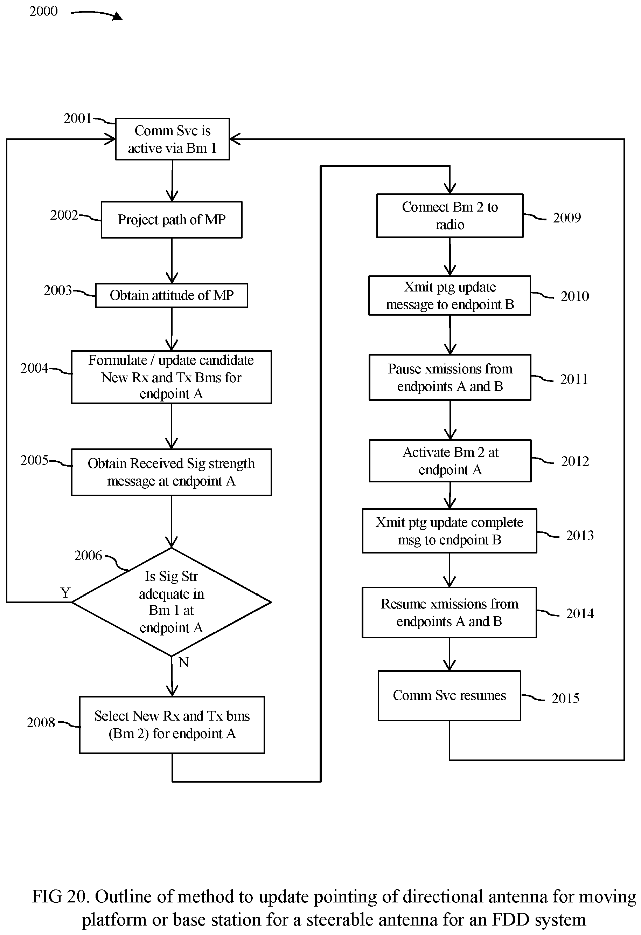

FIG 20 outlines a general example method 2000 to update pointing for a directional antenna for an FDD communication service. The method may be applicable to a communication service for a moving platform that is served by a base station. The method describes the pointing update for one of the points in a FDD system. Since each point must participate in transmission and reception, it is sufficient to describe the method for one of the points; the other point would follow the same method. While the figure (and other figures in this specification) includes many steps, not all steps are required in each implementation of the invention.

Method 2000 refers to beam 1, which is the current beam that is utilized for the communication service for one of the links and beam 2, which is the candidate beam which may provide the communication service, if the service cannot be adequately supported by beam 1 (the current beam). Beam 1 may also be referred to as transmit and receive beam 1, and beam 2 may also be referred to as transmit and receive beam 2. The method starts in block 2001, in which a communication service for a moving platform may be provided, and the service may be enabled by a directional antenna at endpoint A of a link, and the directional antenna may generate beam 1. Endpoint B is at the other end of the link. In blocks 2002 and 2003, respectively, a path for the moving platform may be projected, and the attitude of the platform may be obtained, if necessary. Block 2003 may not be required for a fixed platform, such as a base station, since a base station generally does not change its orientation or attitude with respect to a fixed point. A solution for a new receive and transmitbeam at endpoint A may be calculated in block 2004. In block 2005, the radio to which beam 1 is communicatively coupled, may perform a signal strength measurement for the signal thatis received in beam 1 (and is associated with the communication service), and in block 1906 a determination may be made as to whether transmit and receive beam 1 (the current receive and transmit beam for endpoint A) may continue to be used or if a new transmit and receive beam (beam 2) may be used. If signal strength in beam 1 is adequate, then the cycle may return to block 1901 and blocks 1901 through 1906 are repeated at endpoint A, and since the pointing of transmit and receive beam 1 are similar, if receive beam 1 pointing is adequate, then transmit beam 1 may be inferred to be adequate.

If at block 2006 the determination is made that the signal strength is not adequate, then in block 2008 a new transmit and receive beam (beam 2) may be selected and connected to a radio in block 2009. Endpoint A transmits a pointing update message to endpoint B in block 2010, and transmissions from endpoint A to endpoint B and from endpoint B to endpoint A may be paused in block 2011. During the transmission pause, a pointing update may be applied to endpoint A transmit and receive beam in block 2012. In the case of phased array or lens antenna, the process may be thought of as beam 2 replacing beam 1, and in the case of a mechanically steerable antenna with a single transmit and receivebeam, the process may be thought of as updating the pointing for beam 1 and that with the updated pointing, the beam may be referred to as beam 2 after the updated pointing is implemented (and before the updated is implemented, the beam may be referred to as beam 1). After the pointing update for the beam at endpoint A is complete, endpoint A may transmit a pointing update complete message to endpoint Bin block 2013. Transmissions begin between endpoints A and Bin block 2014, and the communication service may resume in block 2015. The duration of the transmission pause in block 2011 may be very short, and buffering may be implemented at endpoints A and B to prevent an interruption or outage to the communication service, during a beam pointing update. The updated pointing may be implemented in a phased array, lens, mechanically steerable, or other agile antenna. The system may return to block 2001, and the process may be repeated, and beam 2 may be referred to as beam 1. Implementing pointing updates during a transmission pause may reduce or eliminate dropped communication service packets and minimize or eliminate retransmissions and make the network more efficient.

Blocks 1903 and 2003 in methods 1900 and 2000, respectively, may have more applicability to a moving platform, as its attitude may change when the moving platform turns and changes its orientation with respect to a fixed point. In some instances, the moving platform attitude may warrant a switch from a first moving platform phased array or lens antenna to a second moving platform phased array or lens antenna, and vice versa. In the case that the moving platform is an airplane, the moving platform may bank during a turn causing a significant attitude change. In the case that the steerable directional antenna is mechanically steered, there may be no need to wait for transmission pauses in a TDD system or introduce pauses in an FDD system, as the antenna pointing update may not involve a change in state of the RF path between the antenna aperture and the radio. In a phased array or lens antenna, the changes in the RF path that occur during a beam pointing update may introduce bit errors that cause packet loss and result in retransmissions. If the pointing updates are introduced during transmission pauses, then bit errors may be reduced or eliminated and may reduce or prevent packet loss, thereby reducing or eliminating retransmission.

Methods 1900 and 2000 outline elements of a control loop for antenna pointing and the loop bandwidth must be sufficiently high to permit pointing updates to counteract expected perturbations. There may be some softness to the signal strength measurement and assessment blocks (blocks 1905 and 1906; blocks 2005 and 2006), as the protocols for many 2-way communication systems may include adaptive coding and modulation (ACM), in which signal strength or signal to noise measurements are used to adjust signal coding and modulation to fit the channel characteristics to maximize throughput. Signal strength measurement in blocks 1905 and 2005 may refer to a direct or indirect RF power measurement of the signal or a direct or indirect measurement of signal to noise or carrier to noise level. When signal strength or signal to noise is low, a lower order modulation and/or more coding bits may be introduced to overcome the additional errors introduced by the channel. When signal strength or signal to noise is high, a higher order modulation and/or fewer coding bits may be adopted to take advantage of a channel that introduces relatively few errors. ACM techniques are part of many 2-way communications schemes, such as 802.11, LTE, 4G, and 5G. The combination of beam pointing updates and ACM may maximize throughput for a communication service for a moving platform and a base station, including during time segments during which antenna pointing updates or base station transitions or handovers are implemented.

Embodiments of the invention may include a non-transitory computer- readable storage medium storing computer-readable instruction set that, when executed by a processor of a computing device, causes the computing device to perform operations outlinedin method 2000 in FIG 20. Those skilled in the art appreciate that method 2000 provides an exemplary implementation method for beam pointing updates for a communication service for a moving platform and is one of a multitude of similar methods. For instance, it may be possible to combine or adjust the order of the blocks in method 2000 in other embodiments of the invention described herein. Beam pointing update method 2000 may be implemented fora moving platform and base station in the antenna control module in LBSMS and MPRMS, respectively. The beam pointing modules in the LBSMS and MPRMS may be used in conjunction with base station transition modules to assist with communication service handovers from a first base station to a second base station for a moving platform.

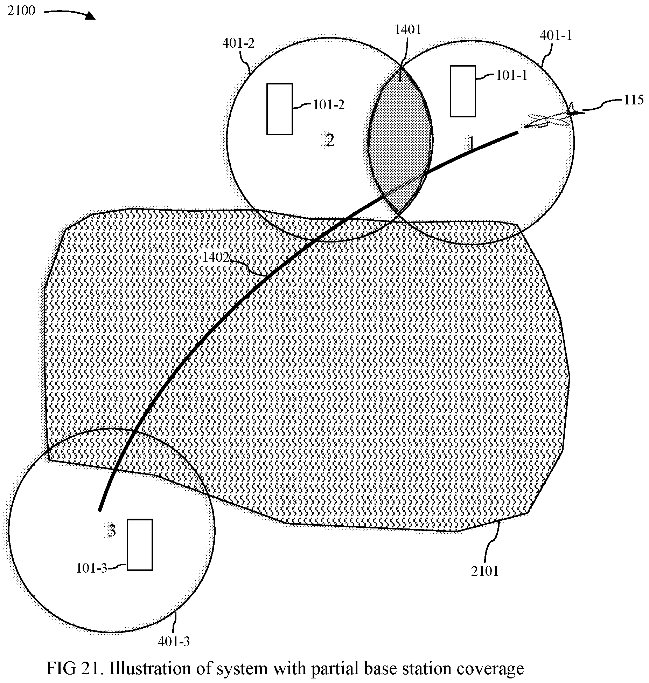

FIG 21 depicts moving platform 115, traversing an area in which there is partial base station service. While FIG 21 depicts the moving platform as an airplane, it maybe an automobile, truck, bus, train, boat, ship, or other moving platform. Path 1402 indicates the route that the moving platform may take and shows that moving platform 115 may traverse base station service area 401-1, base station service transition area 1401, and base station service area 401-2. In these areas, the moving platform communication service may be provided by base stations 101-1 and 101-2, and in transition service area 1401, either or both base station 101-1 and 101-2 may provide the communication service. After moving platform 115 exits service area 401-2, it is no longer served by a base station and is in region 2101. A communications satellite may be used to provide communication service continuity for a moving platform in region 2101 after it has exited base station area 401-2. Region 2101may be part of an ocean, Great Lake, mountain range, or other area where it is unfeasible to build or install a base station. Some reasons for infeasibility may be lack of power or lack of connectivity to a network, such as the Internet, and it may be prohibitively expensive to locate and equip a base station in such an area. The moving platform may cross region 2101 and enter service area 401-3 for base station 101-3 and may obtain its communication service from base station 101-3. Without a communication satellite, there may be no communicationservice for end-users aboard moving platform 115, as it traverses region 2101. Most end- users may complain about a communication service outage, even if it is short in duration, and that's why it may be important to provide an alternative coverage vehicle in areas, where basestation installation may be unfeasible.

A communications satellite may not be utilized for an entire service area, such as the continental United States, because often the communication service demand for moving platforms in a satellite beam may exceed the amount of capacity, provided by the satellite beam. Also, in comparison to a base station, cost of capacity for satellite may be generally higher. However, as stated earlier, it may be feasible to use satellite in an area, where base station deployment is prohibitively expensive.

For a system in which communication service for a moving platform may be provided by a base station and satellite, there may be a service transition or handover between a first base station and a second base station. There may also be a transition or handover between a base station and a communication satellite and between a communication satellite and a base station, and FIG 22 depicts such transitions. FIG 22 depicts base station service areas 401-1, 401-2, and 401-3, which may be served by base stations 101-1, 101-2, and 101-3, respectively. FIG 22 also depicts satellite 2201 providing coverage of service region 2101, for which there is very little service from a base station. A satellite 2201 beam may be designed to provide service over coverage area 2202, and. coverage area 2202 may belarger than service region 2101 to account for satellite pointing errors and satellite antenna misalignment. For cases, where service region 2101 may be very large, more than one satellite beam may be required. Areas 2203-1, 2203-2, and 2203-3 are overlap areas betweenbase station service areas 401-1, 401-2, and 401-3, respectively, and satellite coverage area 2202. The overlap area may range in size from very mall to the size of a base station coverage area and will depend on the satellite beam design and a base station location.

FIG 22 depicts moving platform 115, traversing an area in which there maybe partial base station service. While FIG 22 depicts the moving platform as an airplane, it may be an automobile, truck, bus, train, boat, ship, or other moving platform. Path 1402 indicates a route that the moving platform may take and shows that moving platform 115 maytraverse base station service area 401-1, base station service transition area 1401, and base station service area 401-2. In these areas, the moving platform communication service may be provided by base stations 101-1 and 101-2, and in transition service 1401, either or both base station 101-1 and 101-2 may be utilized to provide a communication service to the moving platform.

Moving platform 115 may enter area 2203-2, which is an area of overlap between service area 401-2, which may be served by base station 101-2, and region 2101, which may be served by communications satellite 2201. While in area 2203-2, moving platform may be served by base station 101-2 and/or satellite 2201. There may be a communication service transition for the moving platform in area 2203-2, and the transitionof the communication service from base station 101-2 to satellite 2201 may be make before break or break before make. The transition from base station to satellite may enable end- users on board moving platform 115 to enjoy uninterrupted communication service, as the base station leaves base station service area 401-2 and enters region 2101.

Moving platform 115 may continue to traverse region 2101 and may obtain its communication service from satellite 2201 via the satellite beam, which provides coverageof region 2101. Moving platform 115 may enter area 2103-3, which is an overlap area between base station service 401-3 and the satellite coverage area 2202. In service area 2203-3, moving platform 115 may be served by base station 101-3 and satellite 2201 with the satellite beam that covers region 2101, and moving platform may transition the communication service from satellite 2201 to base station 101-3 in area 2203-3. The transition may be make before break or break before make. The transition from satellite 2201to base station 101-3 may enable end-users on board moving platform 115 to enjoy uninterrupted communication service, as the moving platform leaves region 2101 and enters base station service area 401-3.

FIG 22 also depicts satellite gateway beam coverage area 2204 and satellite gateway 2205, which may be connected to a network, such as the Internet 105. Forward links for moving platform 115 may be relayed from gateway 2205, which may be served by a satellite beam, which may provide coverage of gateway region 2204, to satellite 2201 and downlinked in the satellite beam, which may provide coverage of region 2101, to the satelliteterminal on board moving platform 115. Return links may go in the other direction and may be uplinked from the satellite terminal on board moving platform 115 in the satellite beam, which may cover region 2101, to satellite 2201 and downlinked to gateway 2205 in the satellite gateway beam, which may provide coverage of region 2204.

System management device 2206 may be communicatively coupled to the satellite and base station gateways and also the Internet 105 or other network and may route data traffic from the Internet 105 or other network to satellite gateway 2205 and to gateways 102-1, 102-2, and 102-3 in base stations 101-1, 101-2, and 101-3, respectively. The systemmanagement device may manage transitions between base station and satellite to maintain communication service continuity as a moving platform moves from a base station serviceregion to a satellite service region and vice versa and minimize packet loss and retransmissions.

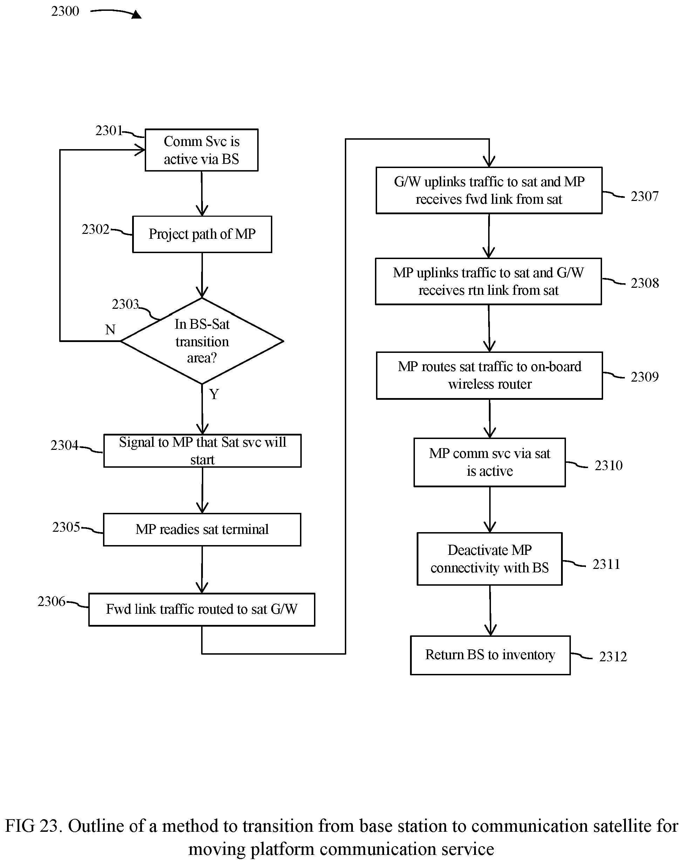

FIG 23 outlines general example method 2300 to transition from a base station to a communication satellite for communication service for a moving platform. While the figure (and other figures in this specification) includes many steps, not all steps are required in each implementation of the invention. The method starts in block 2301, in which a communication service for a moving platform may be active and provided by a base station. In block 2302, a path for the moving platform may be projected, and in block 2303 a determination may be made as to whether the moving platform is in a base station-satellite transition area. If in block 2303 it is determined that the moving platform may not be in a base station - satellite transition area, the system may be returned to block 2301. If in block 2303 it is determined that the moving platform may be in a base station - satellite transition area, and the communication service may transition to satellite, the moving platform relay may be signaled in block 2304, and the moving platform may prepare its on board satellite terminal in step 2305. Forward link traffic may be routed to the satellite gateway uplink site in block 2306 for transmission to the satellite and relayed to the moving platform in block 2307. In block 2308 the moving platform may uplink return link traffic to the satellite, which may relay return link traffic to the satellite gateway. On board the moving platform, connectivity between the satellite terminal and the wireless router, to which end-users connect, may be established in block 2309, and in block 2310, the communication service for end-users on board the moving platform may transition to satellite. In block 2311, connectivity between the moving platform and the base station may be deactivated, and in block 2312 the base station and associated resources and capacity may be returned to inventory. The transition from base station to satellite may be make before break or break before make, depending on whether base station communications are ceased before preparations for satellite connectivity are complete. The complexity of make before break transition may be traded against the duration of the communication service pause that may be introduced in a break before make transition.

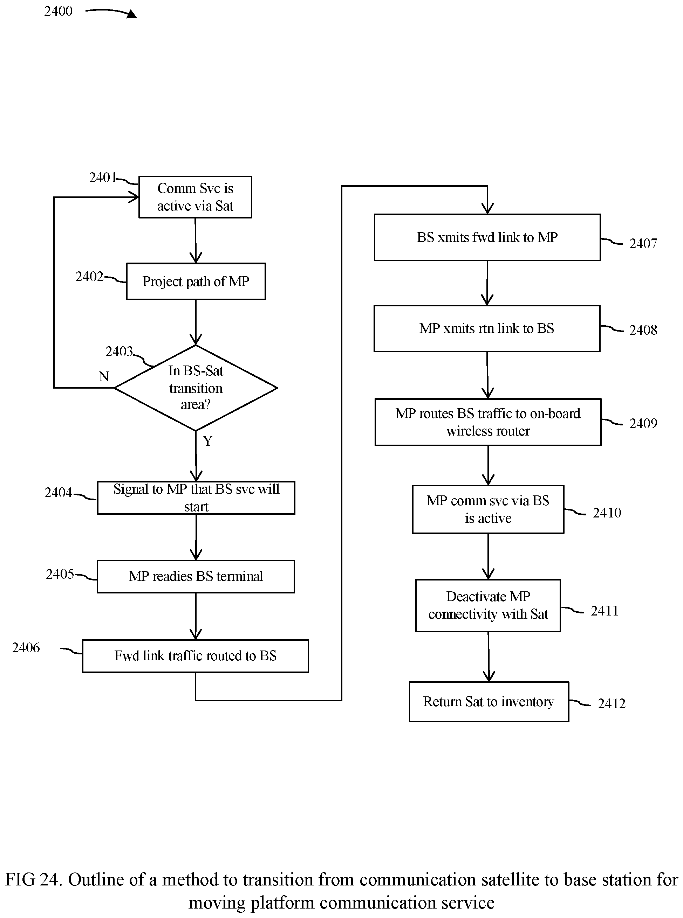

FIG 24 outlines general example method 2400 to transition from a communication satellite to a base station for a communication service for a moving platform. While the figure (and other figures in this specification) includes many steps, not all steps are required in each implementation of the invention. The method starts in block 2401, in which a communication service for a moving platform may be active and provided by a satellite. In block 2402, a path for the moving platform may be projected, and in block 2403 a determination may be made as to whether the moving platform may be in base station- satellite transition area. If in block 2403 it is determined that the moving platform may not bein a base station- satellite transition area, the system is returned to block 2401. If in block 2403 it is determined that the moving platform may be in a base station - satellite transition area, and the communication service may transition to base station, the moving platform relaymay be signaled in block 2404, and the moving platform may prepare its on board base station terminal in step 2405. Forward link traffic may be routed to the base station in block 2406 for transmission to the moving platform in block 2407. In block 2408 the moving platform may transmit return link traffic to the base station. On board the moving platform, connectivity between the base station terminal and the wireless router, to which end-users connect, may be established in block 2409, and in block 2410, the communication service may transition to the base station. In block 2411, connectivity between the moving platform and the satellite may be deactivated, and in block 2412 the satellite capacity may be returned to inventory. The transition from satellite to base station may be make before break or break before make, depending on whether communications to satellite are ceased before or after the moving platform terminal is made ready to resume the communication service. The complexity of make before break transition may be traded against the duration of the communication service pause that may be introduced in a break before make transition.

It is understood that parts of the beam pointing update methods described in methods 1900 or 2000 or similar methods may be included in methods 2300 and 2400, which outline service handover between base station and satellite. Furthermore, it is understood thatparts of the base station transition methods described in methods 1600 and 1700 or similar methods may also be included in methods 2300 and 2400. Embodiments of the invention may include a non-transitory computer-readable storage medium storing computer-readable instruction set that, when executed by a processor of a computing device, causes the computing device to perform operations outlined in methods 2300 and 2400 in FIG 23 and 24, respectively. Those skilled in the art appreciate that methods 2300 and 2400 provide exemplary implementation methods for transitioning a communication service for a movingplatform between a base station and a satellite, and there are a multitude of similar methods.For instance, it may be possible to combine or adjust the order of the blocks in method 2300and 2400 in other embodiments of the invention described herein.

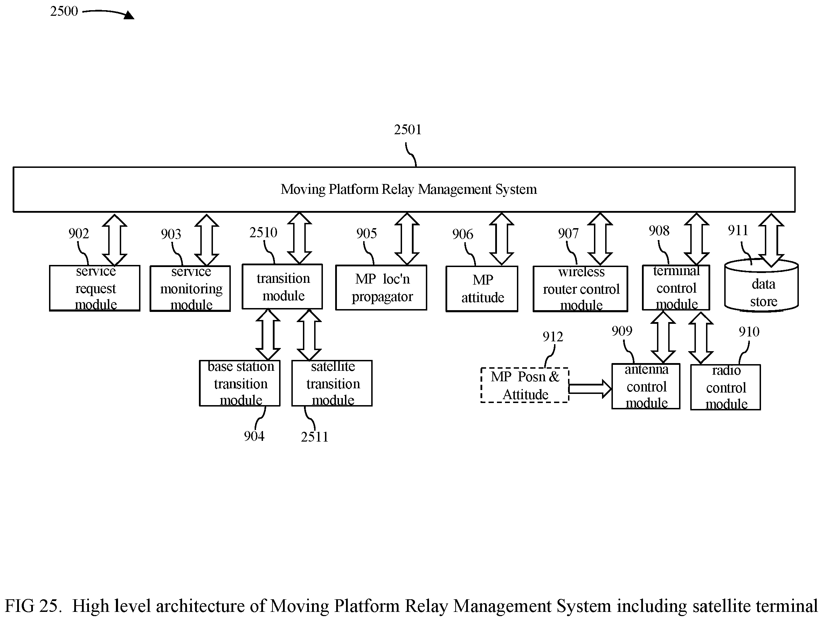

The Moving Platform Relay Management System (MPRMS) 2501, depicted in FIG 25, is similar to that of FIG 9, with additional provisions for satellite terminal control, which may be included in modules 908, 909, and 910 for terminal, antenna, and radiocontrol, respectively, and provisions for communication service transitions involving satellite, which may be part of transition module 2510 and satellite service transition module 2511.

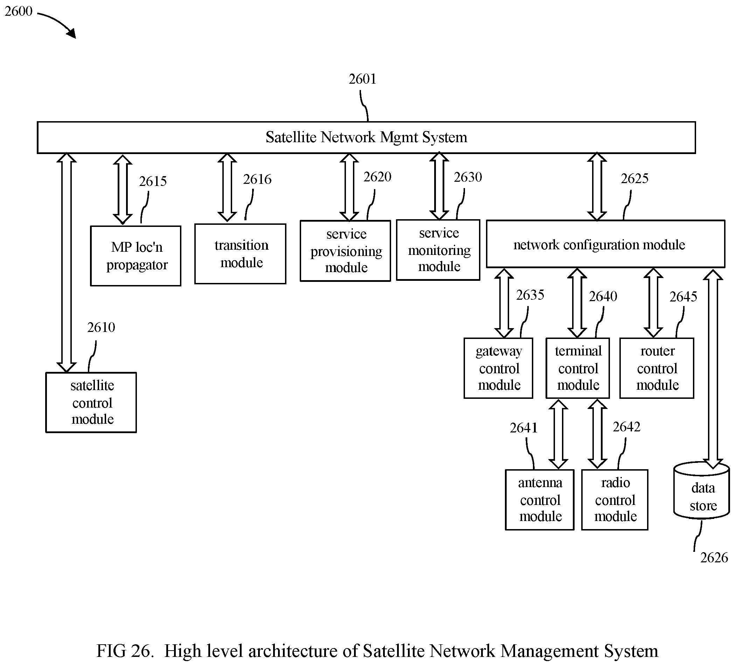

FIG 26 depicts Satellite Network Manager 2601, which may manage the satellite controller 2610, which performs satellite configuration management and control.
The satellite controller configures the hardware on the satellite to set up the proper channels for the forward and return links. The satellite controller may issue commands for transponder pad setting, active hardware selection and configuration, and switch setting to permit the desired uplink and downlink connections for the gateway and user beams. In the case of an on-board hardware failure, a receiver, for instance, the controller may command the satellite to take the failed receiver offline and activate and bring a spare receiver online to take the place of the failed receiver. The Satellite Network Manager may also be responsible for moving platform location estimates 2615, service transitions 2616, service provisioning 2620,service monitoring 2630, and network configuration 2625. The network configuration module 2625 may be responsible for configuring the elements in the path between the Internet (or private network or other network or local area network) and the airplane terminal to ensure data packets arriving from the Internet are delivered to the intended airplane terminal for the forward links, and data packets sent from the airplane terminal are properly forwarded to the Internet or other network. The network configuration control module may manage and control the satellite gateway control module 2635, the airplane terminal control module 2640, or the router control module 2645. The moving platform terminal module 2640 may manage the antenna control 2641 and radio control 2642 modules in the remote terminals. The network configuration module may contain a data store 2626 for storage of network configuration files, which may include terminal, gateway, router, satellite, and otherconfiguration files for a particular communication service.

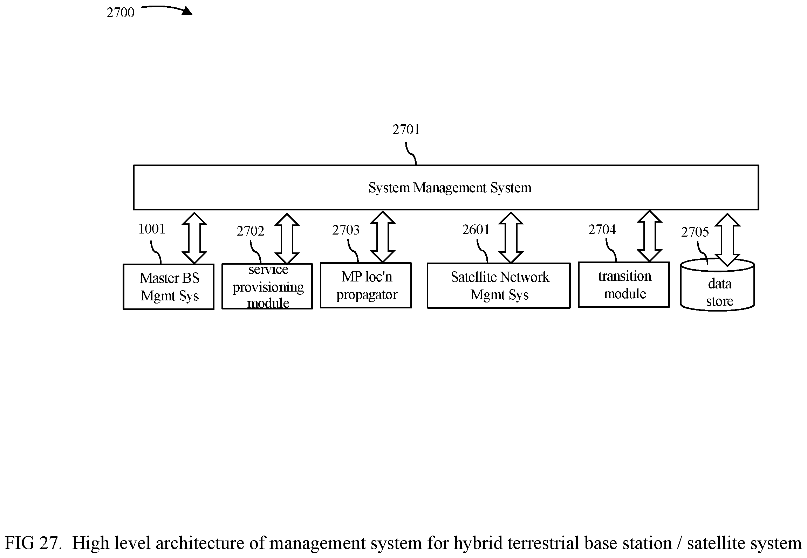

FIG 27 depicts the architecture of the System Management System (SMS) 2701. The SMS may control the **MBSMS** 1001 and SNMS 260land may be responsible for service provisioning 2702 and moving platform location estimates 2703. SMS 2701 may also orchestrate communication service transitions between a base station and a communication satellite, as a moving platform moves from the service area of a base station to the service area of a satellite and vice versa, via transition module 2704. The SMS may collect and process moving platform location messages in the moving platform propagator 2703, and the messages may originate on a moving platform or be obtained from and/or shared with the **MBSMS** 1001 and the SNMS 2601. For a moving platform, which is an aircraft, the aircraft location messages may be **ADS-B** messages. SMS 2701 may contain a data store 2705 for storage of network configuration files, which may include terminal, gateway, router, satellite, and other configuration files for a particular communication service or set of communication services.

A base station may be collocated with a cell phone tower, where there may be electrical power, a shelter or room for a shelter, and a connection to optical fiber, microwave, or some other communication medium, which may be communicatively coupledto a network. The base station may utilize the electrical power and network connection to power the base station equipment and connect the base station gateway to a network, such as the Internet. Base station equipment, such as a gateway, router, radio, computer, on which a management device may run, and other equipment may be housed in a shelter in the vicinity of a base station antenna. A cell phone tower may be a convenient and cost-effective location for a base station.

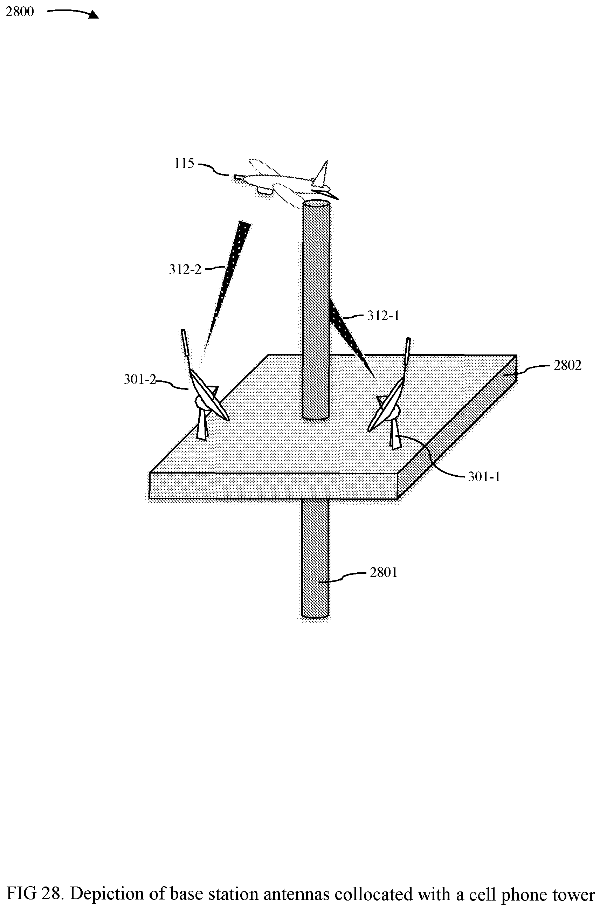

A cell phone tower generally has a metal structure, and the metal structure may provide blockage between a base station antenna and a moving platform. Measures may be introduced to prevent blockage from interrupting a communication service for a moving platform, and FIG 28, which shows base station antennas 301-1 and 301-2 mounted on platform 2802, which is affixed to tower structure 2801, depicts an example. FIG 28 depicts blockage between base station antenna 301-1 and moving platform 115, which is at a particular location, by tower structure 2801. RF power in beam 312-1 may be severely attenuated before reaching its intended destination, because of the blockage. However, for base station antenna 301-2, tower structure 2801 does not block the line of site between the antenna and moving platform 115 with the moving platform at this particular location and there is little attenuation of RF power in beam 312-2. When a moving platform is located in area in which there is severe blockage for a first base station antenna, a second base station antenna may be used to provide the communication service for the moving platform at that location.

With knowledge of moving platform location or projected location, knowledge of base station antenna location, and knowledge of tower structure location, it is possible to anticipate a blockage between a base station antenna and moving platform. With ample warning of a blockage it is possible to conduct a service handover from a base station antenna, which will experience a blockage, to an antenna which will not experience a blockage before the moving platform enters the blockage area. The **LBSMS** may include a blockage forecast function and a base station antenna handover function to manage blockages.

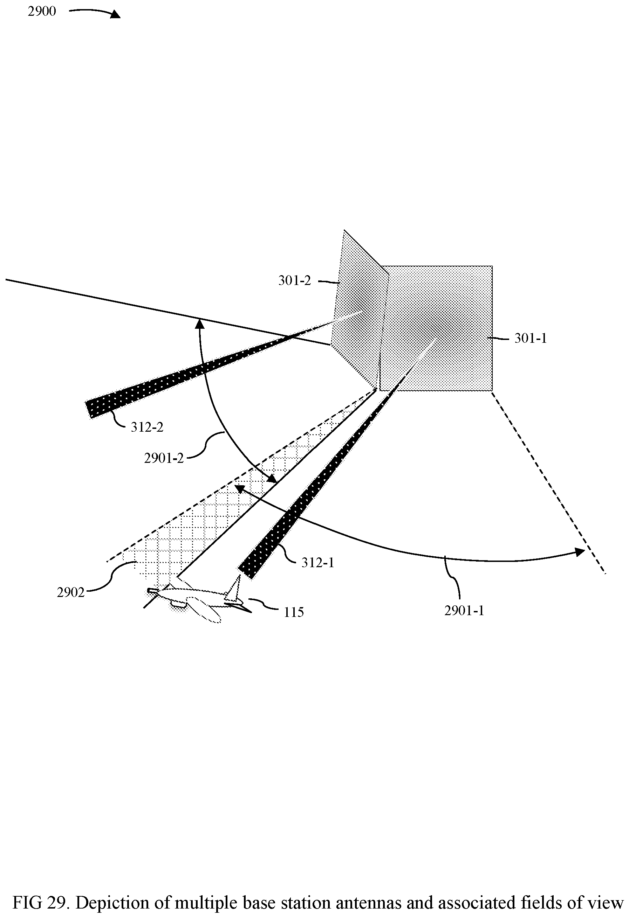

A base station may employ an antenna, whose field of view is less than 360°, and multiple antennas may be required to obtain full 360° coverage at the base stationlocation. As a moving platform traverses a base station service area, a service handover fromone base station antenna to another may be required to maintain communication service continuity. FIG 29 depicts abase station with multiple base station antennas 301-1 and 301-2. Base antenna 301-1 may generate antenna beam 312-1, which may cover part of field of view 2901-1 for base antenna 301-1, and base antenna 301-2 may generate antenna beam 312-2, which may cover part of field of view 2901-2 for base antenna 301-2. There may be some overlap between field of view 2901-1 and 2901-2, and in overlap region 2902, a service handover for moving platform 115 may occur. The LMBS may include a moving platform within antenna field of view function and a base station antenna handover function to manage the instances, when a moving platform moves from the field of a view of first base station antenna to the field of view of a second base station.

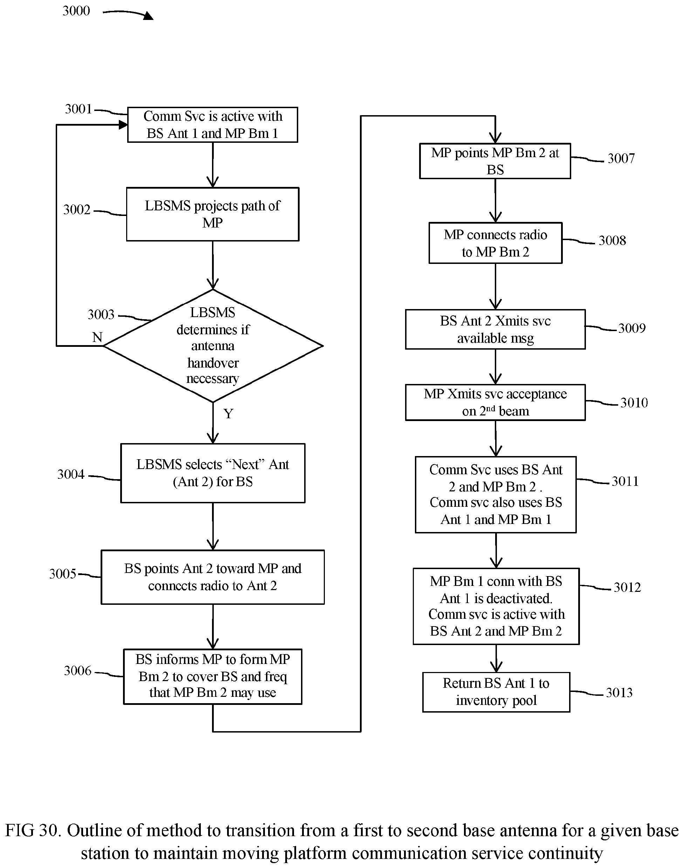

FIG 30 outlines general method 3000 for a service handover from a first base station antenna to a second base station antenna. While the figure (and other figures inthis specification) includes many steps, not all steps are required in each implementation of the invention. In block 3001, a communication service for a moving platform is active and may utilize a first base station antenna beam and beam 1 from the moving platform relay.The **LBSMS** may project the path for the moving platform in block 3002, and in block 3003 a determination may be made as to whether a base station antenna handover may be required. If is no handover is required, the system returns to block 3001. If a handover is required, the **LBSMS** may determine a second base station antenna for the communication service in block 3004. The second base station antenna may be pointed toward the moving platform and connected to a radio in block 3005. In block 3006, the moving platform may be informed to form a second beam and the frequency of the signal it will carry. In block 3007 the moving platform may steer its second beam toward the base station, and in block 3008 a radio may be connected to the moving platform second beam. In block 3009 a service available message may be transmitted from the base station via the second antenna, and a service accept message may be transmitted by the second beam on the moving platform in block 3010. In block 3011, the communication service may be provided by connectivity between the first base station antenna and moving platform beam 1 and connectivity between the second base station antenna and moving platform beam 2. In block 3012, connectivity between base station antenna 1 and moving platform beam 1 may be deactivated and in block 3013, base station antenna 1 may be returned inventory. The base station antenna transition outlined in method 3000 is make before break.

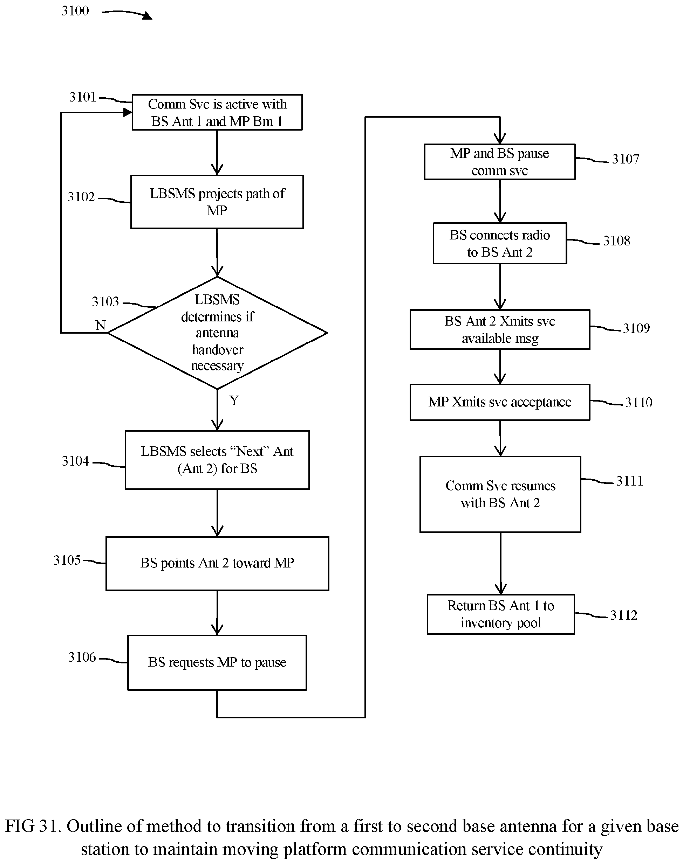

FIG 31 outlines an alternative method 3100 for a service handover from a first base station antenna to a second base station antenna. While the figure (and other figuresin this specification) includes many steps, not all steps are required in each implementation of the invention. In block 3101, a communication service for a moving platform may be active and may utilize connectivity between the first base station antenna beam and beam 1 from the moving platform relay. The **LBSMS** may project the path for the moving platform in block 3102, and in block 3103 a determination may be made as to whether an antenna handover may be required. If no handover is required, the system returns to block 3101. If a handover may be required, the **LBSMS** may determine a second base station antenna for the communication service in block 3104. The second base station antenna may be pointed toward the moving platform in block 3105. In block 3106, the base station may request a pause in communications between the moving platform and the base station. In block 3107 the communication service may be paused, and in block 3108 the radio may be disconnected from the first base station antenna and connected to second base station antenna, during the pause. In block 3109 a service available message may be transmitted from the base station via the second antenna, and a service accept message may be transmitted by beam 1 on the moving platform in block 3110. In block 3111, the transmissions between the base station and moving platform may resume, and the communication service may utilize connectivitybetween the second base station antenna and moving platform beam 1. In block 3112, basestation antenna 1 may be returned inventory. Buffering of traffic on board the moving platform and in the base station may reduce or prevent the need for retransmissions of packets by the base station and moving platform.

Embodiments of the invention may include a non-transitory computer-readable storage medium storing computer-readable instruction set that, when executed by a processor of a computing device, causes the computing device to perform operations outlinedin methods 3000 and 3100 in FIG 30 and 31, respectively. Those skilled in the art appreciate that methods 3000 and 3100 provide exemplary base station antenna handover implementation methods and are samples of a multitude of similar methods. For instance, it may be possible to combine or adjust the order of the blocks in method 3000 and method 3100 in other embodiments of the invention described herein.

Beam hopping may be an effective technique to provide a communication service to multiple moving platforms in the field of view of a base station antenna. In beam hopping the moving platforms may take turns using the base station resource. A first moving platform may communicate with a base station for a segment of time, known as a first dwell or first time slot, and then may relinquish the base station to a second moving platform, which may communicate with a base station in a second time slot, and then may relinquish the base station to a third moving platform, and so forth. The base station may steer or hop an antenna beam toward the moving platform, with which it conducts communications duringits associated time slot, and the beam hop may be generated by an antenna controller for the base station beam. The base station antenna may be an electronically steered phased array antenna or a mechanically steered antenna. The entire frequency spectrum available to a basestation antenna may be devoted to the base station antenna beam. since it may be the only active beam emanating from the base station antenna. The duration of time in which a base station beam dwells on a moving platform may be referred to as a time slot; longer dwells or time slots may mean that a base station beam may be providing more data to a moving platform, and shorter dwells or time slots may mean that a base station beam may be providing less data to a moving platform. Beam hopping may be most effective, when the data rate demand for the moving platform may be significantly lower than the capacity that a base station beam may be supply.

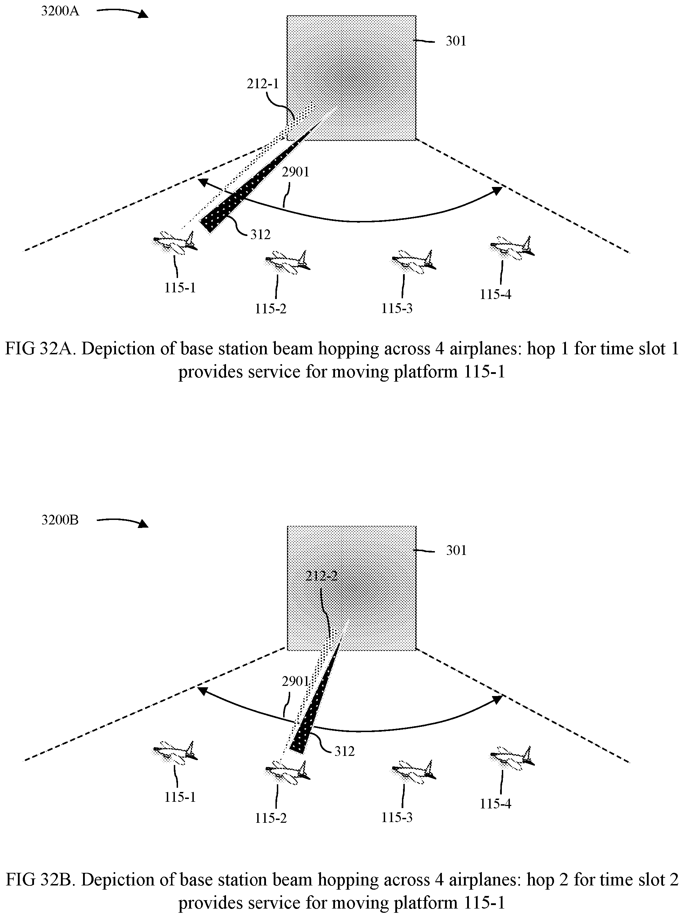

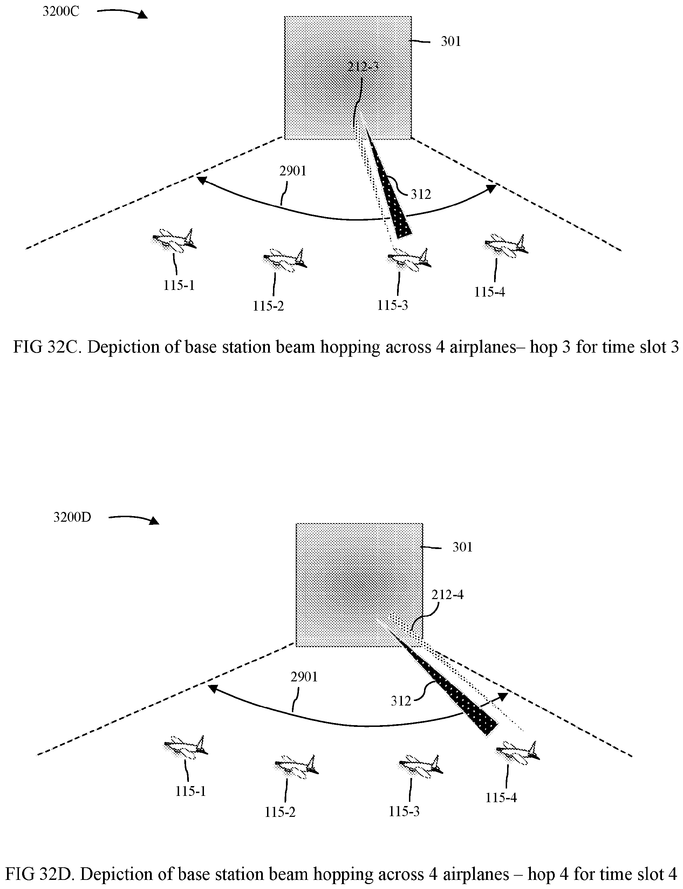

With beam hopping a single beam may be used to serve multiple moving platforms, as shown in FIGS 32A through 32D, which depict 4 airplanes 115-1, 115-2, 115-3, and 115-4 in field of view 2901 of base station antenna 301, which may generate beam 312. While the figures depict the moving platforms as airplanes, the moving platforms may also be a automobiles, trucks, buses, trains, boats, ships, other moving platform, or a combination thereof. Airplanes 115-1, 115-2, 115-3, and 115-4 may generate beams 212-1, 212-2, 212-3, and 212-4, respectively, and each of these beams may be steered toward base station antenna 301. Beam 312 emanating from antenna 301 may hop to and dwell on an airplane, and then may hop to and dwell on the next airplane. The entire frequency spectrum available to base station antenna 301 may be devoted to beam 312, since it may be the only active beam emanating from antenna 301. In FIG 32A, beam 312 may be steered toward airplane 115-1 and airplane 115-1 may steer beam 212-1 toward base station antenna 301. Communications may occur between the base station with base station antenna 301 and airplane 115-1, during time slot 1. At the end of time slot 1, airplane communications may cease between airplane 115-1 and the base station with base station antenna 301. In the next time slot, time slot 2, beam 312 may be steered toward airplane 115-2 and airplane 115-2 may steer beam 212-2 toward base station antenna 301. Communications may occur between the base station with base station antenna 301 and airplane 115-2, during time slot 2. At the end of time slot 2, airplane communications may cease between airplane 115-2 and the base station with base station antenna 301. In the next time slot, time slot 3, beam 312 may be steered toward airplane 115-3 and airplane 115-3 may steer beam 212-3 toward base station antenna 301. Communications may occur between the base station with base station antenna 301 and airplane 115-3, during time slot 3. At the end of time slot 3, airplane communications may cease between airplane 115-3 and the base station with base station antenna 301. In the next time slot, time slot 4, beam 312 may be steered toward airplane 115-4 and airplane 115-4 maysteer beam 212-4 toward base station antenna 301. Communications may occur between the base station with base station antenna 301 and airplane 115-4, during time slot 4. At the end of time slot 4, airplane communications may cease between airplane 115-4 and the base station with base station antenna 301. In the next time slot, time slot 5, beam 312 may be returned to steer toward airplane 115-1 and airplane 115-1 may steer beam 212-1 toward basestation antenna 301. Communications may occur between the base station with base station antenna 301 and airplane 115-1, during time slot 5. At the end of time slot 5, airplane communications may cease between airplane 115-1 and the base station with base station antenna 301. The beam hopping for an airplane may continue until the airplane exits the basestation service area.

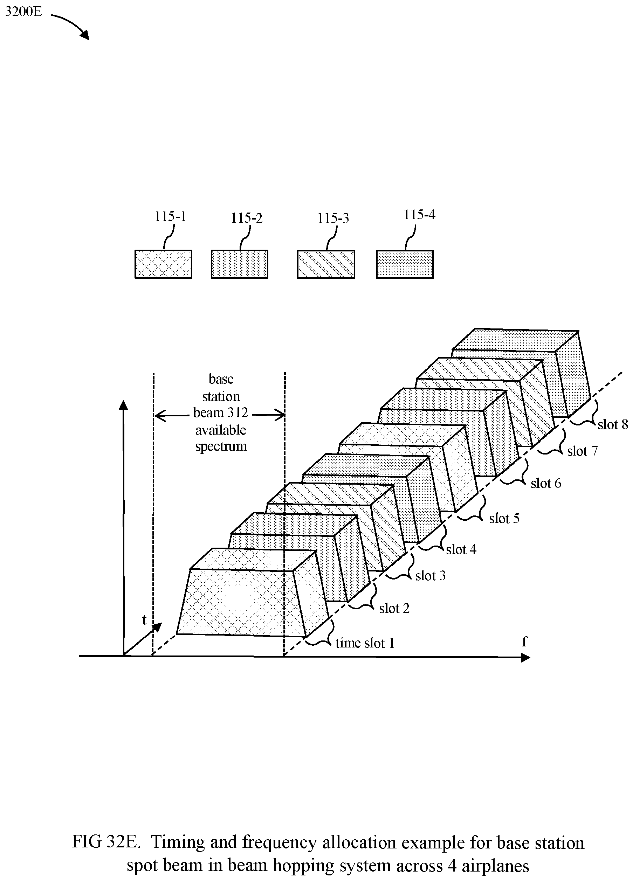

FIG 32E shows the allocation of beam 312 spectrum resources for airplanes 115-1, 115-2, 115-3, and 115-4. FIG 3 lE shows that the entire spectrum available to base station antenna 301 may be made available to beam 312. FIG 32E shows that airplane 115-1 may utilize base station beam 312 in time slots 1 and 5, and only during time slots 1 and 5. In the remaining time slots, base station antenna beam 312 may be utilized by the other airplanes. Airplane 115-2 may access the base station in time slots 2 and 6, and only during time slots 2 and 6. In the remaining time slots, base station antenna beam 312 may be utilized by the other airplanes. If the duration of the time slots is identical, the average capacity provided to each airplane may be equal, and each airplane may be provided ¼ of beam 312 capacity. Adjusting the duration of the time slots, for which an airplane has accessto the network, may be a method of varying the capacity provided to each airplane. Airplanes, which may have access to the base station and network for longer segments of time, may be provided with more capacity than airplanes, which may have access to the basestation and network for shorter segments.

Beam hopping may be one technique for a base station to serve multiple moving platforms within a base station service area; utilizing multiple beams may be another technique that may be used to serve multiple moving platforms. Multiple base station antennas may generate multiple beams, and a multi-beam antenna may also generate multiple beams. When simultaneous multiple base station beams are used to serve multiple moving platforms, care must be taken to ensure that the beams do not interfere with each other. One method to mitigate interference is to employ frequency division multiplexing (FDM), in which the available beam spectrum is partitioned among two or more beams. FDM and Frequency Division Multiple Access (FDMA) are techniques of distributing spectrum and providing interference-free access to a wireless network. If base station spectrum resources are sufficient for each moving platform to utilize is own unique frequency band, spatial separation and antenna discrimination may be used to obtain tolerable interference levels for each of the moving platforms. Frequency reuse, a technique to boost system capacity, may beemployed when the interference caused by the reuse is sufficiently low.

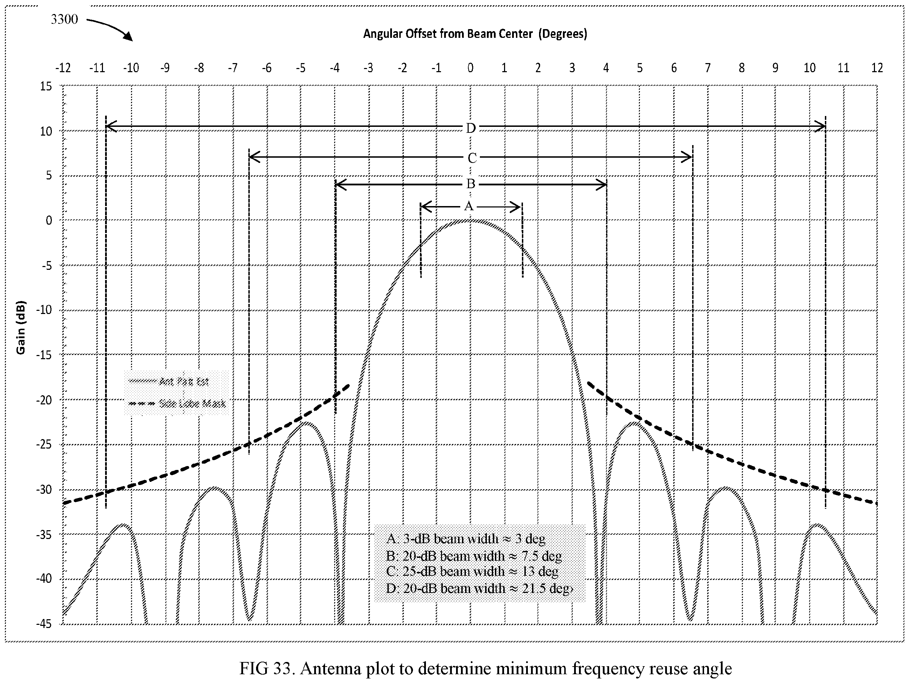

The gain of a directional antenna is reduced (or rolls off) for angles off boresite, as depicted in FIG 33. Figure 33 shows a plot of an antenna pattern as a function of off-axis (from bore site) angle, and a side lobe mask, which is the expected maximum side lobe level as a function of off-axis angle. A side lobe mask may be useful in assessing the maximum expected antenna gain for angles outside the main beam. In the example plot of FIG 33, the side lobe mask is moderately higher than the modeled antenna gain. The gain and side lobe mask plots provide the antenna gain and estimated maximum side lobe level relative to the antenna beam peak. If the peak gain of the antenna (Gpeak) is 33 dB, for instance, then at an off-axis angle 5 degrees, the expected antenna gain is about - 23 dB with respect to beam peak, which means that the antenna gain is about 10 dB.

The 3-dB beam width is a typical range over which a directional antenna may be used, and in the antenna pattern example of FIG 33, the 3-dB beamwidth, which is the range of angles over which the antenna gain is more than Gpeak - 3 dB, is approximately 3 degrees. For angles outside the main antenna lobe, it may be useful to consider a side lobe mask, when estimating antenna beam width. The 20-dB beam width is the range of angles over which the antenna gain is more than Gpeak - 20 dB; in the example of FIG 33, the 20- dB beam width is approximately 7.5 degrees. The 25- and 30- dB beam widths for the antenna example in FIG 33 are approximately 13 and 21.5 degrees, respectively.

The magnitude of the antenna roll-off for a given off-axis angle may be dependent on the size of the antenna aperture; generally, larger antenna apertures produce higher roll-off at a given off-axis angle, and smaller apertures may produce lower roll-off at a given off-axis angle. The level of roll-off that may be required to produce tolerable interference may be dependent on the modulation and coding **(MODCOD)** of the signal; signals with higher levels of modulation and fewer coding bits may require lower interferencelevels than signals with lower levels of modulation and more coding bits.

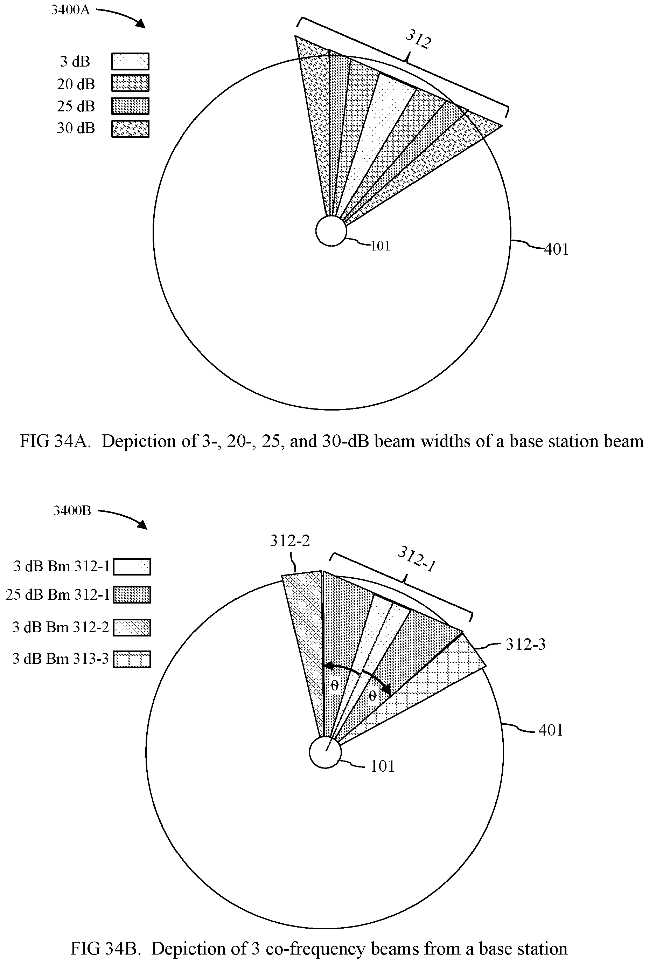

FIG 34A provides a depiction of the 3-, 20-, 25-, and 30-dB beam widths for an example antenna beam 312 for an example base station 101 with service area 401. If a second co-frequency beam was generated for the base station, the second beam may require sufficient angular separation from the first antenna beam to prevent the introduction of excessive interference from the second beam into the first beam and from the first beam in to the second beam. FIG 34B provides an example arrangement of three co-frequency beams 312-1, 312-2, and 312-2 for base station 101 with service area 401. For this example, it has been determined that the beams must introduce interference levels, which are at least 25 dBbelow beam peak, which corresponds to a minimum angular separation of e between beampeak of beam 312-1 and 312-1 (and beam 312-1 and 312-3). If the angular separationwas lower thane, then the interference between the beams may be too high and introduce a significant number of transmission errors in the signal, which the base station transmits to a moving platform.

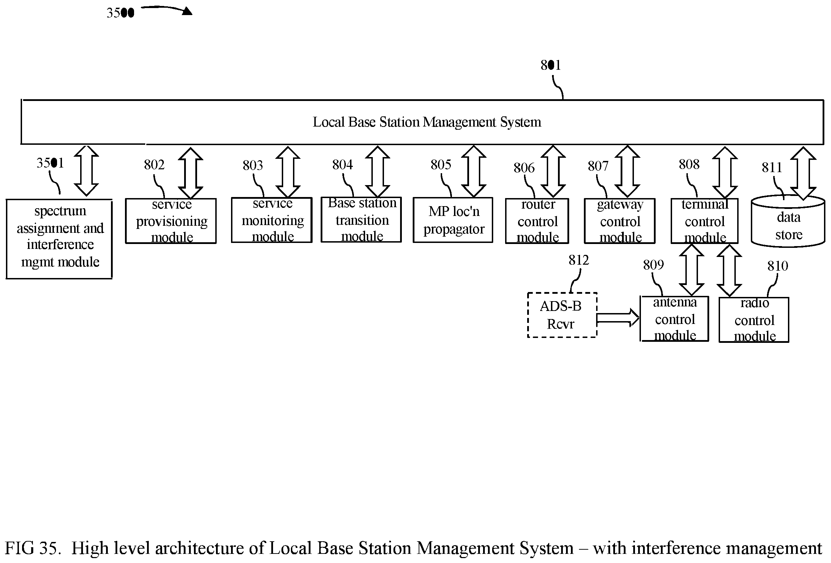

Managing interference among co-frequency beams in a base station may bea dynamic activity, performed in a LBSMS, depicted in FIG 35, by a spectrum assignment and interference management module 3501. The module may keep track of the frequency assignment and beam pointing for each beam in the base station to ensure adequate angular separation between co-frequency beams. With adequate angular separation, the interferencelevels introduced by base station beams, which may be co-frequency to a base station beam, which provides connectivity to the base station for a moving platform, may be acceptable.
The spectrum assignment and interference management module may obtain inputs and provide outputs to base station service provisioning 802, terminal control 808, antenna control 809, and radio control 810 modules. A highly functional spectrum assignment and interference management module may help to maximize the capacity a base station may provide and reduce or eliminate base station and moving platform re-transmissions that arise from excessive interference.

A wireless communication system for moving platforms may comprise a number of base stations, and frequency reuse across base stations may be employed, which may give rise to co-frequency interference. Interference levels from one station into a co- frequency base station may depend on antenna discrimination for a moving platform beam toward an interfering base station, the distance between the interfering base station and moving platform, and the distance between the moving platform and the desired base station.The terms "desired base station" and "desired moving platform" refer to the base station and moving platform, which are conducting communications. The interfering base station and interfering moving platform, which may be referred to as "interferers," are not conducting communications with the desired base station and moving platform, so incidental RF power that the desired base station and moving platform receive from the interfering base station and moving platform is interference, and the level of the interference may determine the degree to which communications between the desired base station and moving platform isimpaired.

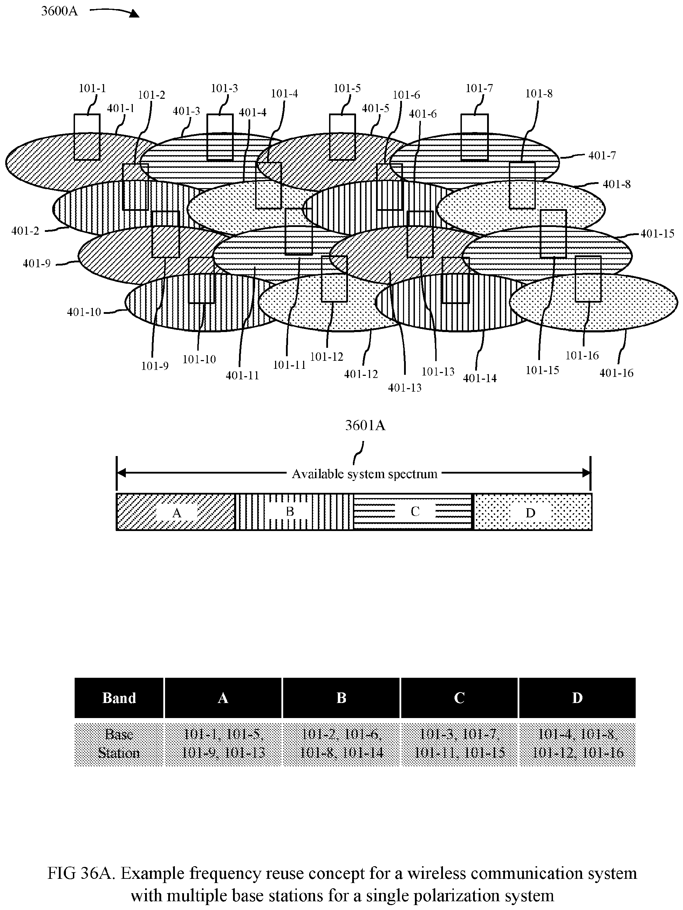

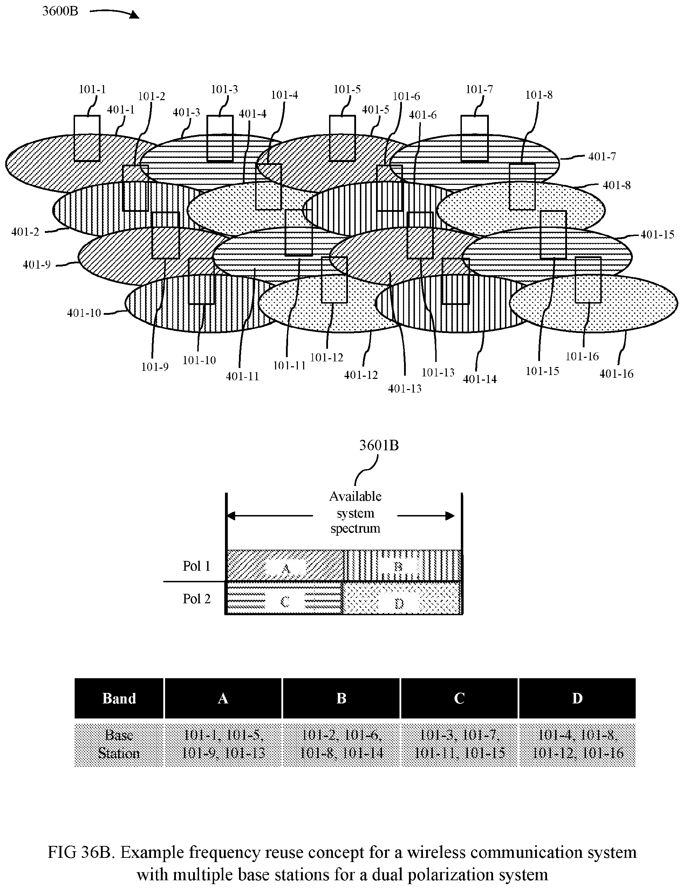

FIG 36A and 36B depict exemplary arrangements of base stations for a single and dual polarization wireless communication system, respectively. In FIG 36A, the system comprises 16 base stations, 101-1 through 101-16, which may provide service to base station regions, 401-1, through 401-16, respectively. Available system spectrum 3601A may be divided into 4 blocks, A, B, C, and D and distributed among the base stations. Since system spectrum 3601A is divided into 4 blocks in this example, this example is referred to asa 4-color system, and each base station service region may be allocated one frequency block,which is represented by one of the 4 colors. System spectrum may be divided into an arbitrary number of blocks, n, and the system may be referred to as an n-color system. Common values for n may be 3, 4, 7, 9, 16, and 21.

Returning to FIG 36A, in the 4-color scheme frequency adjacent base stations use different a frequency block. This arrangement is chosen to reduce interference. The table in FIG 36A shows the base stations that utilize bands A, B, C, and D. For instance,band A is utilized by base stations 101-1, 101-5, 101-9, and 101-13, and the corresponding service areas for these base stations, 401-1, 401-5, 401-9, and 401-13 are not adjacent. Antenna discrimination for the base station and moving platform and longer range between aco-frequency base station and moving platform may reduce the interference introduced by the co-frequency base stations to a tolerable level. It may be possible for adjacent base stations to use the same frequency, if the geometry, for desired base station and moving platform antennas and interfering base station and moving platform antennas, is favorable and resultsin antenna discrimination that reduces interference to tolerable levels.

In the system depicted in FIG 36B, there are 16 base stations, 101-1 through 101-16, which may provide service to base station regions, 401-1, through 401-16, respectively. Available system spectrum 3601B may be divided into 4 blocks, A, B, C, and D and distributed among the base stations. Since the system in FIG 36B utilizes 2 orthogonal polarizations, adjacent base stations may utilize the same frequency block, and the utilization will be in the opposite (orthogonal) sense of polarization to mitigate interference. Since system spectrum 3601B is divided into 4 blocks in this example, this example is referred to asa 4-color system, and each base station service region may be allocated one frequency block,which is represented by one of the 4 colors. System spectrum may be divided into an arbitrary number of blocks, n, and the system may be referred to as an n-color system.Common values for n may be 3, 4, 7, 9, 16, and 21.

With the use of the available spectrum in 2 orthogonal sense of polarization, a dual polarization communication system may provide base stations and moving platforms higher capacity than a single polarization system. Antenna and polarization discrimination for the base station and moving platform antennas may reduce the interference introduced by co-frequency base stations to a tolerable level. It may be possible for adjacent base stations to use the same frequency and polarization, if the geometry, for desired base station and moving platform antennas and interfering base station and moving platform antennas, is favorable and results in antenna discrimination that reduces interference to tolerable levels. Longer range between a co-frequency base station and moving platform may reduce the interference introduced by the co-frequency base stations to a tolerable level.

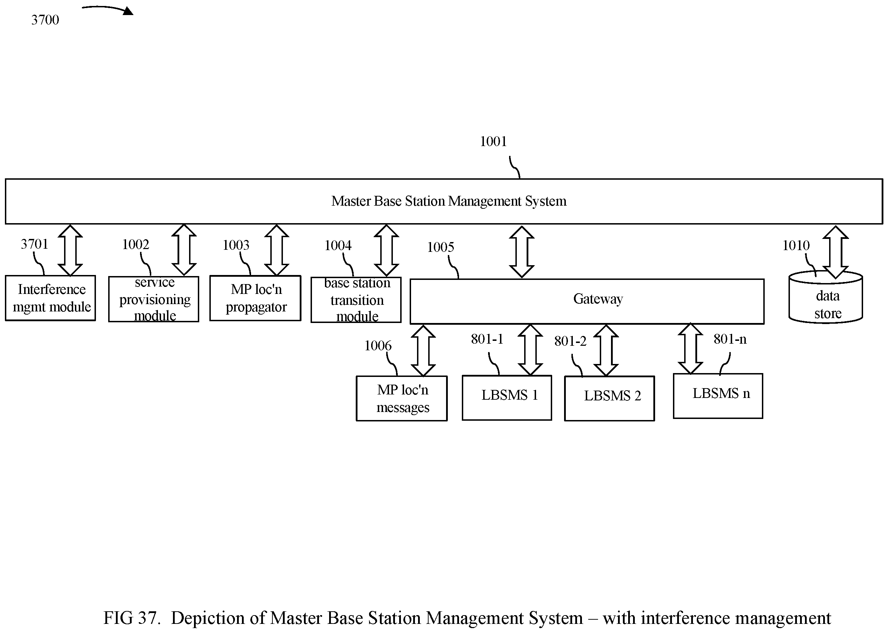

An MBSMS which has:
1. Knowledge of desired moving platform and base station locations
2. Knowledge of interfering base station and moving platform locations
3. Estimates of moving platform and base station antenna patterns
may be able to determine if adjacent base stations may be able to use the same frequency band. FIG 37 depicts the high-level architecture for an MBSMS, which includes interference management module 3701. Interference management module 3701 may assign spectrum to sectors of a base stations, and the assignment may be based the overall usage of spectrum by the nearby base stations and the locations where the spectrum is utilized, an estimate of base station antenna discrimination, and range of a moving platform to a base station.

The present disclosure comprises at least the following aspects:

Aspect 1. A system to facilitate connectivity between a user device on board a movingplatform and a network, the system comprising: a first steerable antenna on the moving platform configured to be pointed toward a base station, wherein the base station is capable of being communicatively coupled to the network, and includes a second steerable antenna configured to be pointed toward the moving platform, includes a receiver capable of being communicatively coupled to the second steerable antenna and to receive a first transmission from the moving platform, and includes a transmitter capable of being communicatively coupled to the second steerable antenna and to transmit a second transmission to the moving platform; a transmitter on the moving platform capable of being communicatively coupled to the first steerable antenna and to transmit the first transmission to the base station; a receiver on the moving platform capable of being communicatively coupled to the first steerable antenna and to receive the second transmission from the base station; a management device on the moving platform, wherein the management device iscapable of being provided with a base station location and to steer the first steerable antenna to point toward the base station, and wherein the management device controls the moving platform transmitter and receiver. The term steerable may refer to beam steering and may reference the steering of the beam (e.g., energy) radiating from an antenna.

Aspect 2: The system of Aspect 1, wherein the first steerable antenna comprises one or more of a mechanically steerable antenna or an electronically steerable antenna.

Aspect 3: The system of Aspect 1, wherein the second steerable antenna comprises one or more of a mechanically steerable antenna or an electronically steerable antenna.

Aspect 4: The system of Aspect 1, wherein the first steerable antenna comprises a mechanically steerable antenna.

Aspect 5: The system of Aspect 1, wherein the first steerable antenna comprises an electronically steerable antenna.

Aspect 6: The system of Aspect 1, wherein the second steerable antenna comprises a mechanically steerable antenna.

Aspect 7: The system of Aspect 1, wherein the second steerable antenna comprises an electronically steerable antenna.

Aspect 8: The system of Aspect 1, further comprising the base station, wherein the base station includes an ADS-B receiver, capable of receiving an ADS-B message transmitted by the moving platform and using the ADS-B message to control pointing of the second steerable antenna. Pointing may be mechanical or electronic.

Aspect 9: The system of any one of Aspects 1-8, further comprising the user device.

Aspect 10: The system of any one of Aspects 1-9, further comprising the moving platform.

Aspect 11: The system of any one of Aspects 1-10, wherein the moving platform is an airplane.

Aspect 12: The system of any one of Aspects 1-11, wherein the moving platform location is at least in partbased on an update estimate of moving platform location.

Aspect 13: The system of any one of Aspects 1-12, wherein the first and second transmission is sent inconformity with LTE, 4G, 5G, or another cellular standard.

Aspect 14: The system of any one of Aspects 1-13, wherein the first and second transmission is sent inconformity with an IEEE 802.11 standard.

Aspect 15: A base station to facilitate connectivity between a user device on board amoving platform and a network, the base station comprising: a first mechanically steerable antenna configured to be pointed toward a moving platform, wherein the moving platform includes a second mechanically steerable antenna configured to be pointed toward the base station, includes a receiver capable of being communicatively coupled to the second mechanically steerable antenna and to receive a first transmission from the base station, and includes a transmitter capableof being communicatively coupled to the first mechanically steerable antenna and to transmit a second transmission to the base station; a transmitter on the base station configured to be communicatively coupled to the firstmechanically steerable antenna and to transmit the first transmission to the moving platform; a receiver on the base station capable of being communicatively coupled to the first mechanically steerable antenna and to receive the second transmission from the moving platform; a management device on the base station, wherein the management device is capableof being provided with a moving platform location, based on an **ADS-B** message transmitted by the moving platform, and to steer the first mechanically steerable antenna toward the moving platform, and wherein the management device controls the base station transmitter and receiver. Where reference is made to a mechanically steerable device such as an antenna, other steering mechanisms may be used such as electronically steerable mechanisms.

Aspect 16: The base station of Aspect 15, wherein the base station is collocated with a cellularnetwork tower.

Aspect 17: The base station of any one of Aspects 15-16, wherein the moving platform location is at least in partbased on an update estimate of moving platform location.

Aspect 18: The base station of any one of Aspects 15-17, wherein the moving platform is an airplane.

Aspect 19: The base station of any one of Aspects 15-18, wherein the first and second transmissions conform with LTE, 4G, 5G, or another cellular standard.

Aspect 20: The base station of any one of Aspects 15-19, wherein the first and second transmissions conform with an IEEE 802.11 standard.

Aspect 21: A method to facilitate network connectivity for a user device located on amoving platform, comprising: obtaining a first location of the moving platform that has a first steerable antenna adapted to be pointed in a direction of a second location of a first base station; steering a second mechanically steerable antenna located at the first base station toward the first location of the moving platform, the first location of the movingplatform being determined based on an **ADS-B** message associated with the moving platform; transmitting from the first base station a first signal toward the mobile platform;and receiving at the first base station a second signal sent from the mobile platform.

Aspect 22: The method of Aspect 21, further comprising: determining a third location of the moving platform; steering a third mechanically steerable antenna located at a second base station toward the third location of the moving platform; adapting the first steerable antenna to point in the direction of the second basestation; transmitting from the second base station a third signal toward the mobileplatform; and receiving at the second base station a fourth signal sent from the mobile platform.

Aspect 23: The method of aspect 22, further comprising: estimating the third location of the moving platform before determining the third location.

Aspect 24: The method of any one of Aspects 21-23, further comprising transmitting the first signal inconformity with LTE, 4G, 5G, or another cellular standard.

Aspect 25: The method of any one of Aspects 21-23, further comprising transmitting the first signal inconformity with an IEEE 802.11 standard.

Aspect 26: The method of any one of Aspects 21-25, further comprising: collocating the first base station with a cellular network tower; obtaining power from equipment shacks, in which cellular network towerequipment is housed, to power the first base station equipment; and communicatively coupling the base station to a network to which cellular network tower equipment is communicatively coupled.

## Claims

1. A system to facilitate connectivity between a user device on board a moving platform and a network, the system comprising:
a first steerable antenna on the moving platform configured to be pointed toward a base station, wherein the base station is capable of being communicatively coupled to the network, and includes a second steerable antenna configured to be pointed toward the moving platform, includes a receiver capable of being communicatively coupled to the second steerable antenna and to receive a first transmission from the moving platform, and includes a transmitter capable of being communicatively coupled to the second steerable antenna and to transmit a second transmission to the moving platform;
a transmitter on the moving platform capable of being communicatively coupled to the first steerable antenna and to transmit the first transmission to the base station;
a receiver on the moving platform capable of being communicatively coupled to the first steerable antenna and to receive the second transmission from the base station;
a management device on the moving platform, wherein the management device is capable of being provided with a base station location and to steer the first steerable antenna to point toward the base station, and wherein the management device controls the moving platform transmitter and receiver.

2. The system of claim 1, wherein the first steerable antenna comprises one or more of a mechanically steerable antenna or an electronically steerable antenna.

3. The system of claim 1, wherein the second steerable antenna comprises one or more of a mechanically steerable antenna or an electronically steerable antenna.

4. The system of claim 1 wherein the first steerable antenna comprises a mechanically steerable antenna.

5. The system of claim 1, wherein the first steerable antenna comprises an electronically steerable antenna.

6. The system of claim 1, wherein the second steerable antenna comprises a mechanically steerable antenna.

7. The system of claim 1, wherein the second steerable antenna comprises an electronically steerable antenna.

8. The system of claim 1, further comprising the base station, wherein the base station includes an ADS-B receiver, capable of receiving an ADS-B message transmitted by the moving platform and using the ADS-B message to control pointing of the second steerable antenna.

9. The system of any one of claims 1-8, further comprising the user device.

10. The system of any one of claims 1-9, further comprising the moving platform.

11. The system of any one of claims 1-10, wherein the moving platform is an airplane.

12. The system of any one of claims 1-11, wherein the moving platform location is at least in partbased on an update estimate of moving platform location.

13. The system of any one of claims 1-12, wherein the first and second transmission is sent inconformity with LTE, 4G, 5G, or another cellular standard.

14. The system of any one of claims 1-13, wherein the first and second transmission is sent inconformity with an IEEE 802.11 standard.

15. A method of using the system of any one of claims 1-14.
